(19) Europäisches Patentamt / European Patent Office / Office européen des brevets

(11) **EP 2 892 094 B1**

(12) **EUROPEAN PATENT SPECIFICATION**

(45) Date of publication and mention
of the grant of the patent:
**10.10.2018 Bulletin 2018/41**

(21) Application number: **13832451.2**

(22) Date of filing: **13.08.2013**

(51) Int Cl.:
*H01M 4/587* (2010.01)          *H01M 4/36* (2006.01)
*H01M 10/0525* (2010.01)          *H01M 10/054* (2010.01)

(86) International application number:
**PCT/JP2013/071867**

(87) International publication number:
**WO 2014/034431 (06.03.2014 Gazette 2014/10)**

(54) **NEGATIVE ELECTRODE MATERIAL, NEGATIVE ELECTRODE ACTIVE MATERIAL, NEGATIVE ELECTRODE, AND ALKALI METAL ION BATTERY**

NEGATIVELEKTRODENMATERIAL, NEGATIVELEKTRODENAKTIVMATERIAL, NEGATIVELEKTRODE UND ALKALIMETALLLITHIUMIONENBATTERIE

MATÉRIAU D'ÉLECTRODE NÉGATIVE, MATÉRIAU ACTIF D'ÉLECTRODE NÉGATIVE, ÉLECTRODE NÉGATIVE ET BATTERIE AUX IONS DE MÉTAL ALCALIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 29.08.2012   JP 2012188326
07.12.2012   JP 2012268643
07.12.2012   JP 2012268645
06.02.2013   JP 2013021643
18.06.2013   JP 2013127294

(43) Date of publication of application:
**08.07.2015 Bulletin 2015/28**

(73) Proprietor: **Sumitomo Bakelite Co., Ltd.
Shinagawa-ku
Tokyo 140-0002 (JP)**

(72) Inventors:
• **ONO, Yukiharu**
**Tokyo 140-0002 (JP)**
• **TAKEUCHI, Takeshi**
**Tokyo 140-0002 (JP)**
• **WATANABE, Tsuyoshi**
**Tokyo 140-0002 (JP)**

(74) Representative: **Ter Meer Steinmeister & Partner
Patentanwälte mbB
Nymphenburger Straße 4
80335 München (DE)**

(56) References cited:
WO-A1-2007/040007          JP-A- H10 223 226
JP-A- 2000 203 818          JP-A- 2006 083 012
JP-A- 2012 114 024          US-A1- 2009 220 863
US-A1- 2009 297 953          US-A1- 2012 021 294

**Description**

TECHNICAL FIELD

The present invention relates to a negative-electrode material, a negative-electrode active material, a negative electrode, and an alkali metal ion battery.

BACKGROUND ART

In general, a graphite material is used as a negative-electrode material for an alkali metal ion battery. However, since the layer spacing of crystallites in the graphite material increases or decreases depending on doping or undoping of alkali metal ions such as lithium, a strain is likely to be generated in the crystallites. Accordingly, since a crystal structure of the graphite material is likely to be broken due to repeated charging and discharging, it is thought that an alkali metal ion battery using the graphite material as a negative-electrode material is poor in charging and discharging cycle characteristics.

Patent Document 1 (Japanese Unexamined Patent Publication No. 8-64207) discloses a carbonaceous material for an electrode of a non-aqueous solvent secondary battery in which when the carbonaceous material is electrochemically doped with lithium and is subjected to $^7$Li-NMR analysis, a main resonance peak is observed which is shifted by 80 ppm to 200 ppm to a low magnetic field side from a resonance line of a reference material LiCl.

Patent Document 2 (Japanese Unexamined Patent Publication No. 8-115723) discloses a carbonaceous material for an electrode of a secondary battery in which the average layer spacing of face (002) measured using an X-ray diffraction method is equal to or greater than 0.365 nm and a ratio ($\rho_H/\rho_B$) of a density ($\rho_H$) measured using helium gas as a replacement medium to a density ($\rho_B$) measured using butanol as a replacement medium is equal to or greater than 1.15.

Patent Document 4 (Japanese Unexamined Patent Publication No. 10-223226) discloses a carbonaceous material for an electrode of a secondary battery which is a carbide of aromatic condensed polymers as condensates of an aromatic compound having a phenolic hydroxyl group with aldehydes and in which an atomic ratio H/C of a hydrogen atom and a carbon atom is less than 0.1, an amount of carbon dioxide gas adsorbed is equal to or greater than 10 ml/g, an X-ray scattering intensity ratio $I_W/I_D$ is equal to or greater than 0.25 when the scattering intensity at which the value of s defined as $s=2\cdot\sin\theta/\lambda$ (where $\theta$ is a scattering angle and $\lambda$ is a wavelength of X-ray) is 0.5 nm$^{-1}$ is measured in measurement of small-angle X-ray scattering, the intensity measured in a dry state is $I_D$, and the intensity measured in a water-contained state is $I_W$.

Since the carbonaceous material has a layer spacing of crystallites larger than that of the graphite material and has destruction of a crystal structure occurring less often than in the graphite material due to repeated charging and discharging, it is thought that the charging and discharging cycle characteristics thereof is excellent (see Patent Documents 1 to 4).

RELATED DOCUMENT

PATENT DOCUMENT

[Patent Document 1] Japanese Unexamined Patent Publication No. 8-64207
[Patent Document 2] Japanese Unexamined Patent Publication No. 8-115723
[Patent Document 3] Pamphlet of International Publication No. WO2007/040007
[Patent Document 4] Japanese Unexamined Patent Publication No. 10-223226

DISCLOSURE OF THE INVENTION

As disclosed in Patent Documents 1 to 4, the carbonaceous material having a layer spacing of crystallites larger than that of the graphite material is more likely to degrade in the air and is poorer in storage characteristics than the graphite material. Accordingly, it is necessary to store the carbonaceous material in an inert gas atmosphere or the like just after being manufactured and it is thus more difficult to treat the carbonaceous material than the graphite material.

In a negative-electrode material having a $d_{002}$ which is larger than that of the graphite material, since fine pores are more likely to grow than in the graphite material, moisture is likely to be adsorbed in the pores. When moisture is adsorbed, an irreversible reaction occurs between lithium with which the negative-electrode material is doped and moisture and an increase in irreversible capacity at the time of initial charging or a degradation in charging and discharging cycle characteristics is caused as a result. For this reason, it is thought that the negative-electrode material having a large $d_{002}$ is poorer in storage characteristics than the graphite material (for example, see Patent Document 3). Accordingly, in the related art, it has been attempted to improve the storage characteristics by closing the pores of the negative-electrode material so as to reduce the equilibrium moisture adsorption (for example, see Patent Document 3).

However, the inventors of the present invention tested regeneration of the negative-electrode material by heating and drying the degraded negative-electrode material to remove moisture adsorbed in the fine pores, but could not completely regenerate the negative-electrode material. As disclosed in Patent Document 3, when the pores of the negative-electrode material are closed, there is a problem in that the charging and discharging capacity is lowered. Accordingly, the improvement in storage characteristics and the improvement in charging and discharging capacity have a relationship of trade-off.

Since a lithium ion battery using a negative-electrode material having a $d_{002}$ larger than that of the graphite material has excellent charging and discharging cycle characteristics but the voltage thereof greatly varies with the charging and discharging, the voltage thereof is likely to reach a cutoff voltage and the allowable range of a state of charge (SOC) is narrow.

This is because the negative-electrode material having a $d_{002}$ larger than that of the graphite material has a small ratio of a flat zone in a discharging curve in lithium counter electrode evaluation and the potential thereof greatly varies with the progress of the charging and discharging.

Therefore, an object of the present invention is to provide a negative-electrode material for an alkali metal ion battery which has an average layer spacing of face (002) which is larger than that of a graphite material and which has excellent storage characteristics and charging and discharging capacity.

The inventors of the present invention have intensively studied design guidelines for realizing a negative-electrode material for an alkali metal ion battery which has an average layer spacing of face (002) which is larger than that of a graphite material and which has excellent storage characteristics. As a result, it was found that the scale of a chemisorbed water ratio invented by the inventors of the present invention is effective as the design guidelines, thereby having made a first invention.

The inventors of the present invention have intensively studied design guidelines for realizing a negative-electrode material for an alkali metal ion battery which has an average layer spacing of face (002) which is larger than that of a graphite material and which has excellent storage characteristics and charging discharging capacity. As a result, it was found that a negative-electrode material is excellent in storage characteristics and charging and discharging capacity in which an amount of carbon dioxide gas adsorbed and a density thereof are in specific ranges and a discharging curve thereof has a specific shape, thereby having made a second invention.

The inventors of the present invention undertook intensive study in order to realize a negative-electrode material for an alkali metal ion battery which has an average layer spacing of face (002) which is larger than that of a graphite material and which has excellent storage characteristics and charging and discharging capacity. As a result, it was found that a negative-electrode material is excellent in storage characteristics and charging and discharging capacity in which a ratio ($\rho^H/\rho^B$) of a density ($\rho^H$) measured using helium gas as a replacement medium to a density ($\rho^B$) measured using butanol as a replacement medium and $\rho^H$ are in specific ranges, thereby having made a third invention.

According to the first invention of the present invention, there is provided a carbonaceous negative-electrode material for an alkali metal ion battery in which an average layer spacing $d_{002}$ of face (002) which is calculated by an X-ray diffraction method using CuK$\alpha$ radiation as a radiation source is equal to or greater than 0.340 nm, wherein the negative-electrode material is maintained under conditions of a temperature of 40°C and a relative humidity of 90 %RH for 120 hours,

(A) a step of maintaining the negative-electrode material under conditions of a temperature of 130°C and a nitrogen atmosphere for 1 hour and (B) a step of raising the temperature of the negative-electrode material subjected to the step of (A) at 10°C/min from 40°C to 540°C under the nitrogen atmosphere and measuring a decrease in weight of the negative-electrode material are sequentially performed using a thermogravimetric apparatus, and

when a weight of the negative-electrode material after the step of (A) is X, a weight of the negative-electrode material at 150°C in the step of (B) is $Y_1$, and a weight of the negative-electrode material at 250 °C in the step of (B) is $Y_2$, a chemisorbed water ratio A defined as $100 \times (Y_1 - Y_2)/X$ is equal to or less than 0.5%.

According to the second invention of the present invention, there is provided a carbonaceous negative-electrode material for an alkali metal ion battery in which an average layer spacing $d_{002}$ of face (002) which is calculated by an X-ray diffraction method using CuK$\alpha$ radiation as a radiation source is equal to or greater than 0.340 nm, wherein an amount of carbon dioxide gas adsorbed is less than 10.0 ml/g, a density ($\rho^B$) measured using butanol as a replacement medium is equal to or greater than 1.50 g/cm$^3$, and when a half-cell, which is manufactured using the negative-electrode material as a negative electrode, using metallic lithium as a counter electrode, and using a solution in which $LiPF_6$ is dissolved in a carbonate-based solvent at a ratio of 1 M as an electrolyte solution, is charged at 25°C using a constant-current constant-voltage method under conditions of a charging current of 25 mA/g, a charging voltage of 0 mV, and a charging cutoff current of 2.5 mA/g and is then discharged using a constant-current method under conditions of a discharging current of 25 mA/g and a discharging cutoff voltage of 2.5 V, a voltage when the half-cell is discharged by 20 mAh/g from a fully-charged state is $V_0$ [V], a voltage in the course of discharging is $V_q$ [V], discharging capacity when $V_q$ reaches $V_0 \times 2.5$ is A, and discharging capacity when $V_q$ reaches 2.5 is B, A/B is equal to or greater than 0.38.

According to the third invention of the present invention, there is provided a carbonaceous negative-electrode material for an alkali metal ion battery in which an average layer spacing $d_{002}$ of face (002) which is calculated by an X-ray diffraction method using CuKα radiation as a radiation source is equal to or greater than 0.340 nm,

wherein a ratio ($\rho^H/\rho^B$) of a density ($\rho^H$) measured using helium gas as a replacement medium to a density ($\rho^B$) measured using butanol as a replacement medium is greater than 1.05 and less than 1.25, and

a density ($\rho^H$) measured using helium gas as a replacement medium is equal to or greater than 1.84 g/cm$^3$ and equal to or less than 2.10 g/cm$^3$.

According to the present invention, there is provided a negative-electrode active material including the negative-electrode material according to the first invention, the second invention, or the third invention of the present invention.

According to the present invention, there is provided a negative electrode for an alkali metal ion battery including:

a negative-electrode active material layer including the negative-electrode active material; and
a negative-electrode collector,

wherein the negative-electrode active material layer and the negative-electrode collector are stacked in the aforementioned order.

According to the present invention, there is provided an alkali metal ion battery including at least:

the negative electrode for an alkali metal ion battery;
an electrolyte; and
a positive electrode.

According to the present invention, it is possible to provide a negative-electrode material for an alkali metal ion battery which has an average layer spacing of face (002) which is larger than that of a graphite material and which has excellent storage characteristics and charging and discharging capacity.

BRIEF DESCRIPTION OF THE DRAWINGS

The above and other objects, advantages and features of the present invention will be more apparent from the following description of certain preferred embodiments taken in conjunction with the accompanying drawings, in which:

Fig. 1 is a schematic diagram illustrating an example of a lithium ion battery according to an embodiment of the present invention;
Fig. 2 is a schematic diagram illustrating an example of a discharging curve of a negative-electrode material according to an embodiment of the present invention;
Fig. 3 is an enlarged view of a flat zone in Fig. 2;
Fig. 4 is a schematic diagram illustrating examples of a cross-sectional structure of a negative-electrode material according to an embodiment of the present invention;
Fig. 5 is a diagram illustrating an optical-microscope photograph of a cross-section of a negative-electrode material obtained in Example 1;
Fig. 6 is a diagram illustrating an optical-microscope photograph of a cross-section of a negative-electrode material obtained in Example 5; and
Fig. 7 is a diagram illustrating an optical-microscope photograph of a cross-section of a negative-electrode material obtained in Comparative Example 1.

DESCRIPTION OF EMBODIMENTS

Hereinafter, embodiments of the present invention will be described with reference to the accompanying drawings. The drawings are schematic diagrams and the scales thereof are not equal to the actual scales thereof.

[First Invention]

Hereinafter, an embodiment of a first invention will be described.

<Negative-electrode Material>

A negative-electrode material according to an embodiment is a carbonaceous negative-electrode material used in an alkali metal ion battery such as a lithium ion battery or a sodium ion battery and an average layer spacing $d_{002}$ of face (002) (hereinafter, referred to as "$d_{002}$") which is calculated by an X-ray diffraction method using CuKα radiation as a radiation source is equal to or greater than 0.340 nm, preferably equal to or greater than 0.350 nm, and more preferably equal to or greater than 0.365 nm. When $d_{002}$ is equal to or greater than the lower limit, destruction of a crystal structure occurring less often due to repeated doping and undoping of alkali metal ions of lithium or the like is suppressed and it is thus possible to improve the charging and discharging characteristics of the negative-electrode material.

The upper limit of the average layer spacing $d_{002}$ is not particularly limited, but is typically equal to or less than 0.400 nm, preferably equal to or less than 0.395 nm, and more preferably equal to or less than 0.390 nm. When $d_{002}$ is equal to or less than the upper limit, it is possible to suppress an increase in irreversible capacity of the negative-electrode material.

A carbonaceous material having such average layer spacing $d_{002}$ is generally called non-graphitizable carbon.

The negative-electrode material according to this embodiment includes non-graphitizable carbon. Accordingly, it is possible to improve charging and discharging cycle characteristics thereof. The non-graphitizable carbon is an amorphous carbon material, unlike graphite materials. The non-graphitizable carbon can be normally obtained by carbonizing a resin composition.

Since the negative-electrode material according to this embodiment includes non-graphitizable carbon, it is possible to further improve cycle characteristics of an alkali metal ion battery using the negative-electrode material according to this embodiment or input and output characteristics of a large current.

The negative-electrode material according to this embodiment is specified such that a chemisorbed water ratio A calculated in the following process is equal to or less than 0.5%, preferably equal to or less than 0.4%, and more preferably equal to or less than 0.3%.

(Process of Calculating Chemisorbed Water Ratio A)

(Process 1) The negative-electrode material according to this embodiment is maintained under conditions of a temperature of 40°C and a relative humidity of 90 %RH for 120 hours.

(Process S2) (A) a step of maintaining the negative-electrode material under conditions of a temperature of 130°C and a nitrogen atmosphere for 1 hour and (B) a step of raising the temperature of the negative-electrode material subjected to the step of (A) at 10°C/min from 40°C to 540°C under the nitrogen atmosphere and measuring a decrease in weight of the negative-electrode material are sequentially performed using a thermogravimetric apparatus to calculate the chemisorbed water ratio A from the following expression.

$$\text{Chemisorbed water ratio A } [\%] = 100 \times (Y_1 - Y_2)/X$$

Here, X represents the weight of the negative-electrode material subjected to the step of (A). $Y_1$ represents the weight of the negative-electrode material at 150°C in the step of (B). $Y_2$ represents the weight of the negative-electrode material at 250°C in the step of (B).

When the chemisorbed water ratio A is equal to or less than the upper limit, it is possible to suppress degradation of the negative-electrode material even in a case in which the negative-electrode material having a larger average layer spacing $d_{002}$ of face (002) than that of the graphite materials is stored in the air.

The lower limit of the chemisorbed water ratio A is not particularly limited, but is generally equal to or greater than 0.01%.

(Chemisorbed Water Ratio A)

When the chemisorbed water ratio A is equal to or less than the upper limit, it is thought that the reason for obtaining a negative-electrode material having excellent storage characteristics is that the lower chemisorbed water ratio A the negative-electrode material has, the more difficult it is to cause adsorption of moisture, although the reason is not apparent.

In general, in a negative-electrode material having a $d_{002}$ which is larger than that of the graphite material, since fine pores are more likely to grow than in the graphite material, moisture is likely to be adsorbed in the pores. When moisture is adsorbed, an irreversible reaction occurs between lithium with which the negative-electrode material is doped and the moisture and an increase in irreversible capacity at the time of initial charging or a degradation in charging and discharging cycle characteristics is caused as a result. For this reason, it is thought that the negative-electrode material having a large $d_{002}$ is poorer in storage characteristics than the graphite material (for example, see Patent Document 3). Accordingly, in the related art, it has been attempted to improve the storage characteristics by closing the pores of the negative-electrode material to reduce the equilibrium moisture adsorption (for example, see Patent Document 3).

However, the inventors of the present invention tested regeneration of the negative-electrode material by heating and drying the degraded negative-electrode material to remove moisture adsorbed in the fine pores, but could not completely regenerate the negative-electrode material. As disclosed in Patent Document 3, when the pores of the negative-electrode material are closed, there is a problem in that the charging and discharging capacity is lowered.

Therefore, the inventors of the present invention more intensively studied. As a result, it has been made to be clear that moisture to be adsorbed in the negative-electrode material can be roughly classified into physisorbed water and chemisorbed water and the smaller amount of chemisorbed water the negative material has, the more excellent the storage characteristics and the charging and discharging capacity are. That is, the inventors found that the scale of the amount of chemisorbed water is effective as a design guideline for realizing the negative-electrode material having excellent storage characteristics and charging and discharging capacity, thereby having made the present invention.

Here, the physisorbed water means adsorbed water which is physically present as water molecules on the surface of the negative-electrode material. On the other hand, the chemisorbed water means adsorbed water which coordinates with or chemically bonds to a first layer of the surface of the negative-electrode material.

It is thought that the surface of a negative-electrode material having a small amount of chemisorbed water has a structure which is difficult to coordinate with or chemically bond to moisture or a structure which is difficult to change to such a structure even when the negative-electrode material is maintained in the air. Therefore, even when the negative-electrode material according to the present invention in which the chemisorbed water ratio A is equal to or less than the upper limit is stored in the air for a long time, it is thought that it is difficult to cause adsorption of moisture or to change the surface structure thereof, thereby improving the storage characteristics.

In this embodiment, moisture desorbed from the negative-electrode material in the step of (A) is called physisorbed water, and moisture desorbed from the negative-electrode material in the step of (B) is called chemisorbed water. The chemisorbed water ratio A is a water absorption ratio of the chemisorbed water desorbed between 150°C and 250°C and is an indicator of the amount of chemisorbed water in the negative-electrode material.

(Chemisorbed Water Ratio B)

In the negative-electrode material according to this embodiment, a chemisorbed water ratio B calculated in the following process is preferably equal to or less than 1.0%, more preferably equal to or less than 0.7%, and still more preferably equal to or less than 0.5%.

(Process of Calculating Chemisorbed Water Ratio B)

(Process 1) The negative-electrode material according to this embodiment is maintained under conditions of a temperature of 40°C and a relative humidity of 90 %RH for 120 hours.

(Process 2) (A) a step of maintaining the negative-electrode material under conditions of a temperature of 130°C and a nitrogen atmosphere for 1 hour and (B) a step of raising the temperature of the negative-electrode material subjected to the step of (A) at 10°C/min from 40°C to 540°C under the nitrogen atmosphere and measuring a decrease in weight of the negative-electrode material are sequentially performed using a thermogravimetric apparatus to calculate the chemisorbed water ratio B from the following expression.

$$\texttt{Chemisorbed water ratio B [\%]=100×(Y_2-Y_3)/X}$$

Here, X represents the weight of the negative-electrode material subjected to the step of (A). $Y_2$ represents the weight of the negative-electrode material at 250°C in the step of (B). $Y_3$ represents the weight of the negative-electrode material at 500°C in the step of (B).

When the chemisorbed water ratio B is equal to or less than the upper limit, it is possible to further improve the storage characteristics of the negative-electrode material. When the chemisorbed water ratio B is equal to or less than the upper limit, it is possible to further improve the charging and discharging capacity of the negative-electrode material. The chemisorbed water ratio B is a water absorption ratio of the chemisorbed water desorbed between 250°C and 500°C and is an indicator of the amount of chemisorbed water which is more difficult to desorb than the chemisorbed water quantified at the chemisorbed water ratio A.

In the negative-electrode material according to this embodiment, a weight decrease ratio at 250°C defined by the following expression is preferably equal to or less than 0.6% and more preferably equal to or less than 0.5%.

$$\texttt{Weight decrease ratio [\%] at 250°C} = 100 \times (X - Y_2)/X$$

Here, X represents the weight of the negative-electrode material subjected to the step of (A). $Y_2$ represents the weight of the negative-electrode material at 250°C in the step of (B).

When the weight decrease ratio is equal to or less than the upper limit, it is possible to further improve the storage characteristics of the negative-electrode material.

In the negative-electrode material according to this embodiment, a weight decrease ratio at 500°C defined by the following expression is preferably equal to or less than 1.6% and more preferably equal to or less than 1.2%.

$$\texttt{Weight decrease ratio [\%] at 500°C} = 100 \times (X - Y_3)/X$$

Here, X represents the weight of the negative-electrode material subjected to the step of (A). $Y_3$ represents the weight of the negative-electrode material at 500°C in the step of (B).

When the weight decrease ratio is equal to or less than the upper limit, it is possible to further improve the storage characteristics of the negative-electrode material.

(Moisture Content Measured Using Karl Fischer's Coulometric Titration Method)

In the negative-electrode material according to this embodiment, when a moisture content generated by maintaining the negative-electrode material under conditions of a temperature of 40°C and a relative humidity of 90 %RH for 120 hours, maintaining the negative-electrode material under conditions of a temperature of 130°C and a nitrogen atmosphere for 1 hour to preliminarily dry the negative-electrode material, and then maintaining the preliminarily-dried negative-electrode material at 200°C for 30 minutes is measured using a Karl Fischer's coulometric titration method, the moisture content generated from the preliminarily-dried negative-electrode material is preferably equal to or less than 0.20 wt% with respect to 100 wt% of the preliminarily-dried negative-electrode material, more preferably equal to or less than 0.15 wt%, and still more preferably equal to or less than 0.10 wt%.

By setting the moisture content to be equal to or less than the upper limit, it is possible to further improve the storage characteristics of the negative-electrode material. The moisture content is an indicator of the amount of chemisorbed water desorbed by maintaining the negative-electrode material at 200°C for 30 minutes.

When the moisture content measured using the Karl Fischer's coulometric titration method is equal to or less than the upper limit, it is thought that the reason for further suppressing the degradation of the negative-electrode material is that the lower moisture content the negative material has, the more difficult it is to cause adsorption of moisture, although the reason is not apparent.

From the study undertaken by the inventors of the present invention, it has been made to be clear that moisture to be adsorbed in the negative-electrode material can be roughly classified into physisorbed water and chemisorbed water and the smaller amount of chemisorbed water the negative material has, the more excellent the storage characteristics and the charging and discharging capacity are. That is, the inventors found that the scale of the amount of chemisorbed water is effective as a design guideline for realizing the negative-electrode material having excellent storage characteristics and charging and discharging capacity.

Here, the physisorbed water means adsorbed water which is physically present as water molecules on the surface of the negative-electrode material. On the other hand, the chemisorbed water means adsorbed water which coordinates with or chemically bonds to a first layer of the surface of the negative-electrode material.

It is thought that the surface of a negative-electrode material having a small amount of chemisorbed water has a structure which is difficult to coordinate with or chemically bond to moisture or a structure which is difficult to change to such a structure even when the negative-electrode material is maintained in the air. Therefore, by setting the moisture content to be equal to or less than the upper limit, it is thought that it is difficult to cause adsorption of moisture or to change the surface structure even when the negative-electrode material is stored in the air for a long time, thereby improving the storage characteristic.

In this embodiment, moisture desorbed from the negative-electrode material in the preliminary drying in which the negative-electrode material is maintained under the conditions of a temperature of 130°C and a nitrogen atmosphere for 1 hour is called physisorbed water, and moisture desorbed from the negative-electrode material in the process in which the preliminarily-dried negative-electrode material is maintained at 200°C for 30 minutes is called chemisorbed water.

The negative-electrode material according to this embodiment is used as a negative-electrode material of an alkali metal ion battery such as a lithium ion battery or a sodium ion battery. Particularly, the negative-electrode material according to this embodiment is suitably used as a negative-electrode material of a lithium ion battery such as a lithium ion secondary battery.

(Crystallite Size)

In the negative-electrode material according to this embodiment, the crystallite size in the c-axis direction (hereinafter, also abbreviated as "$Lc_{(002)}$") calculated using an X-ray diffraction method is preferably equal to or less than 5 nm, more preferably equal to or less than 3 nm, and still more preferably equal to or less than 2 nm.

(Average Particle Diameter)

In the negative-electrode material according to this embodiment, the particle diameter ($D_{50}$, average particle diameter) at the time of 50% accumulation in a volume-based cumulative distribution is preferably equal to or greater than 1 μm and equal to or less than 50 μm and more preferably equal to or greater than 2 μm and equal to or less than 30 μm. Accordingly, it is possible to produce a high-density negative electrode.

(Specific Surface Area)

In the negative-electrode material according to this embodiment, the specific surface area measured using a three-point BET method in nitrogen adsorption is preferably equal to or greater than 1 $m^2/g$ and equal to or less than 15 $m^2/g$ and more preferably equal to or greater than 3 $m^2/g$ and equal to or less than 8 $m^2/g$.

By setting the specific surface area measured using the three-point BET method in nitrogen adsorption to be equal to or less than the upper limit, it is possible to further suppress irreversible reaction of the negative-electrode material and the electrolyte.

By setting the specific surface area measured using the three-point BET method in nitrogen adsorption to be equal to or greater than the lower limit, it is possible to obtain appropriate permeability of the electrolyte into the negative-electrode material.

The method of calculating the specific surface area is as follows.

A monomolecular layer adsorption amount $W_m$ is calculated using Expression (1), the total surface area $S_{total}$ is calculated using Expression (2), and the specific surface area S is calculated using Expression (3) .

$$1 / [ W \cdot \{ (P_o / P) - 1 \} ] = \{ (C-1) / (W_m \cdot C) \} (P / P_o) (1 / (W_m \cdot C) ) \dots (1)$$

In Expression (1), P represents the pressure of adsorbate gas at the adsorption equilibrium, $P_o$ represents the saturated vapor pressure of the adsorbate at an adsorption temperature, W represents the absorbed amount under an adsorption equilibrium pressure P, $W_m$ represents the monomolecular layer adsorbed amount, and C represents a constant ($C = \exp\{(E_1 - E_2)RT\}$) [where $E_1$ represents the adsorption heat (kJ/mol) of a first layer and $E_2$ represents the liquefaction heat (kJ/mol) at the measurement temperature of the adsorbate] related to the magnitude of an interaction between the solid surface and the adsorbate.

$$S_{total} = (W_m N A_{cs}) M \dots (2)$$

In Expression (2), N represents the Avogadro number, M represents the molecular weight, and $A_{cs}$ represents the adsorption cross-sectional area.

$$S = S_{total} / w \dots (3)$$

In Expression (3), w represents the weight of a sample (g).

(Amount of Carbon Dioxide Gas Adsorbed)

In the negative-electrode material according to this embodiment, the amount of carbon dioxide gas adsorbed is preferably less than 10.0 ml/g, more preferably equal to or less than 8.0 ml/g, and still more preferably equal to or less than 6.0 ml/g. When the amount of carbon dioxide gas adsorbed is equal to or less than the upper limit, it is possible to further improve the storage characteristics of the negative-electrode material.

In the negative-electrode material according to this embodiment, the amount of carbon dioxide gas adsorbed is preferably equal to or greater than 0.05 ml/g, more preferably equal to or greater than 0.1 ml/g, still more preferably equal to or greater than 1.0 ml/g, still more preferably equal to or greater than 3.0 ml/g, and still more preferably greater than 5.0 ml/g. When the amount of carbon dioxide gas adsorbed is equal to or greater than the lower limit or greater than the lower limit, it is possible to further improve the charging capacity of lithium.

The amount of carbon dioxide gas adsorbed can be measured using a material obtained by vacuum-drying the negative-electrode material at 130°C for 3 hours or more using a vacuum dryer as a measurement sample and using ASAP-2000M made by Micromeritics Instrument Corporation.

(Halogen Content)

In the negative-electrode material according to this embodiment, a halogen content is preferably less than 50 ppm, more preferably equal to or less than 30 ppm, and still more preferably equal to or less than 10 ppm. When the halogen content is equal to or less than the upper limit, it is possible to further improve the storage characteristics of the negative-electrode material. The halogen content can be controlled by adjusting a halogen gas concentration in the process gas used at the time of carbonization or the amount of halogen included in a source material of the negative-electrode material. The halogen content can be calculated by adsorbing the halogen hydrogen gas in combustion gas, which has been produced by combusting the negative-electrode material, in sodium hydroxide and then quantify the halogen content in the solution using an ion chromatographic analysis apparatus.

(Discharging Capacity)

In the negative-electrode material according to this embodiment, the discharging capacity when a half-cell produced under the conditions to be described in the second invention has been subjected to charging and discharging under charging and discharging conditions to be described in the second invention is preferably equal to or greater than 360 mAh/g, more preferably equal to or greater than 380 mAh/g, still more preferably equal to or greater than 400 mAh/g, and still more preferably equal to or greater than 420 mAh/g. The upper limit of the discharging capacity is not particularly limited and is preferably higher. However, the discharging capacity is realistically equal to or less than 700 mAh/g and is generally equal to or less than 500 mAh/g. In this specification, "mAh/g" represents the capacity per 1 g of the negative-electrode material.

(Density)

In the negative-electrode material according to this embodiment, the ratio ($\rho^H/\rho^B$) of the density ($\rho^H$) measured using helium gas as a replacement medium to the density ($\rho^B$) measured using butanol as a replacement medium is preferably greater than 1.05, more preferably equal to or greater than 1.06, and still more preferably equal to or greater than 1.07.

The ratio $\rho^H/\rho^B$ is preferably less than 1.25, more preferably less than 1.20, and still more preferably less than 1.15.

When the ratio $\rho^H/\rho^B$ is equal to or greater than the lower limit, it is possible to further improve the charging and discharging capacity of an alkali metal ion battery obtained using the negative-electrode material. When the ratio $\rho^H/\rho^B$ is equal to or less than the upper limit, it is possible to further improve the storage characteristics of the negative-electrode material.

In this way, the negative-electrode material according to this embodiment in which ratio $\rho^H/\rho^B$ is in the above-mentioned range is more excellent in balance of the storage characteristics and the charging and discharging capacity.

The value of $\rho^H/\rho^B$ is an indicator of a pore structure of the negative-electrode material and means that the larger the value is, the more the number of pores which butanol cannot enter but helium can enter is. That is, the larger value of $\rho^H/\rho^B$ means that the more fine pores are present. When the number of pores which helium cannot enter is large, the value of $\rho^H/\rho^B$ decreases.

In the negative-electrode material according to this embodiment, the value of $\rho^H$ is preferably equal to or greater than 1.84 g/cm$^3$ and equal to or less than 2.10 g/cm$^3$, is more preferably equal to or greater than 1.85 g/cm$^3$ and equal to or less than 2.05 g/cm$^3$, and still more preferably equal to or greater than 1.85 g/cm$^3$ and equal to or less than 2.00 g/cm$^3$, from the viewpoint of control of the pore size.

In the negative-electrode material according to this embodiment, the value of $\rho^B$ is preferably equal to or greater than 1.50 g/cm$^3$ and equal to or less than 1.80 g/cm$^3$, is more preferably equal to or greater than 1.55 g/cm$^3$ and equal to or less than 1.78 g/cm$^3$, and still more preferably equal to or greater than 1.60 g/cm$^3$ and equal to or less than 1.75 g/cm$^3$, from the viewpoint of control of the pore size.

(Pore Volume)

In the negative-electrode material according to this embodiment, the pore volume in which the pore diameter measured using a mercury intrusion method ranges from 0.003 $\mu$m to 5 $\mu$m is preferably less than 0.55 ml/g, more preferably equal to or less than 0.53 ml/g, and still more preferably equal to or less than 0.50 ml/g, from the viewpoint of improvement of a charging density.

In the negative-electrode material according to this embodiment, the pore volume in which the pore diameter measured using a mercury intrusion method ranges from 0.003 $\mu$m to 5 $\mu$m is preferably equal to or greater than 0.10 ml/g, more preferably equal to or greater than 0.20 ml/g, still more preferably equal to or greater than 0.30 ml/g, still more preferably equal to or greater than 0.40 ml/g, and still more preferably equal to or greater than 0.45 ml/g, from the viewpoint of reduction of irreversible capacity.

Here, the pore volume based on the mercury intrusion method can be measured using AUTOPORE III 9420 made by Micromeritics Instrument Corporation.

<Method of Producing Negative-Electrode Material>

A method of producing the negative-electrode material according to this embodiment will be described below.

The negative-electrode material according to this embodiment can be produced by performing a carbonization process under appropriate conditions, for example, using a specific resin composition as a source material.

The production of the negative-electrode material using a resin composition as a source material has been performed in the related art. However, in this embodiment, factors such as (1) composition of the resin composition, (2) conditions of the carbonization process, and (3) an occupation ratio of the source material in a space in which the carbonization process is performed are highly controlled. In order to obtain the negative-electrode material according to this embodiment, it is important to highly control these factors.

Particularly, in order to obtain the negative-electrode material according to this embodiment, the inventors of the present invention found that it is important to appropriately set the factors (1) and (2) and then to set (3) the occupation ratio of the source material in the space in which the carbonization process is performed to be lower than the reference in the related art.

An example of the method of producing the negative-electrode material according to this embodiment will be described below. Here, the method of producing the negative-electrode material according to this embodiment is not limited to the following example.

(Resin Composition)

First, (1) a resin composition to be carbonized is selected as a source material of the negative-electrode material.

Examples of the resin included in the resin composition serving as a source material of the negative-electrode material according to this embodiment include thermosetting resins; thermoplastic resins; petroleum or coal tar or pitch such as petroleum tar or pitch secondarily produced at the time of producing ethylene, coal tar produced at the time of dry-distilling coal, heavy components or pitch obtained by removing low-boiling-point components of coal tar by distillation, and tar or pitch obtained by liquefying coal; products obtained by cross-linking the tar or pitch; and natural polymer materials such as coconut husk or timber. One or two or more types thereof can be used in combination. Among these examples, thermosetting resins can be preferably used in that they can be purified in a raw material step, a negative-electrode material having small impurities is obtained, and processes for purification can be greatly reduced to cause a decrease in cost.

Examples of thermosetting resin include phenol resins such as novolac-type phenol resin and a resol-type phenol resin; epoxy resins such as a Bisphenol-type epoxy resin and a novolac-type epoxy resin; melamine resins; urea resins; aniline resins; cyanate resins; furan resins; ketone resins; unsaturated polyester resins; and urethane resins. Modifications obtained by modifying these examples into various components may be used.

Among these, phenol resins such as novolac-type phenol resin and a resol-type phenol resin which are resins using formaldehyde; melamine resins; urea resins; and aniline resins can be preferably used for the reason of a high actual carbon ratio.

Thermoplastic resins are not particularly limited and examples thereof include polyethylene, polystyrene, polyacrylonitrile, acrylonitrile-styrene (AS) resin, acrylonitrile-butadiene-styrene (ABS) resin, polypropylene, vinyl chloride, methacryl resin, polyethylene terephthalate, polyamide, polycarbonate, polyacetal, polyphenylene ether, polybutylene terephthalate, polyphenylene sulfide, polysulfone, polyether sulfone, polyetherether ketone, polyetherimide, polyamideimide, polyimide, and polyphthalamide.

When a thermosetting resin is used, a curing agent thereof can be used together.

Examples of the curing agent to be used for a novolac-type phenol resin include hexamethylene tetramine, a resol-type phenol resin, polyacetal, and paraformaldehyde. Hexamethylene tetramine or the like can be used as the curing agent for a resol-type phenol resin, a melamine resin, a urea resin, and an aniline resin. The curing agents known for the epoxy resin such as polyamine compounds such as aliphatic polyamine and aromatic polyamine, acid anhydride, imidazole compound, dicyandiamide, novolac-type phenol resin, biphenol-type phenol resin, resol-type phenol resin can be used for the epoxy resins.

The mixing content of the curing agent is generally equal to or greater than 0.1 parts by weight and equal to or less than 50 parts by weight with respect to 100 parts by weight of thermosetting resin.

A thermosetting resin which is generally used along with a small amount of curing agent may be used along with an amount of curing agent smaller than generally used, or may be used without using the curing agent together.

An additive in addition to thermosetting resin and the curing agent can be mixed into the resin composition as a source material of the negative-electrode material.

The additive used herein is not particularly limited, and examples thereof include carbon precursors carbonized at a temperature of 200°C to 800°C, organic acids, inorganic acids, nitrogen-containing compounds, oxygen-containing compounds, aromatic compounds, and nonferrous metal elements. These additives can be used singly or in combination of two or more types depending on the type or the characteristics of the resin to be used.

Regarding the resin used as the source material of the negative-electrode material, nitrogen-containing resins to be described later may be contained as a main-component resin. When the nitrogen-containing resins are not included in the main-component resin, at least one type of nitrogen-containing compound may be contained as a component other than the main-component resin, or the nitrogen-containing resins may be contained as the main-component resin and nitrogen-containing compound may be contained as a component other than the main-component resin. By carbonizing such a resin, it is possible to obtain a negative-electrode material containing nitrogen. When nitrogen is contained in the negative-electrode material, suitable electrical characteristics can be given to the resultant negative-electrode material by the electronegativity of nitrogen. Accordingly, it is possible to promote occlusion and release of alkali metal ions in and from the negative-electrode material and thus to further improve the charging and discharging characteristics of the resultant alkali metal ion battery.

Here, examples of the nitrogen-containing resins include the followings.

Examples of a thermosetting resin include a phenol resin and an epoxy resin denatured with a nitrogen-containing component, in addition to a melamine resin, a urea resin, an aniline resin, a cyanate resin, and a urethane resin.

Examples of a thermoplastic resin includes polyacrylonitrile, acrylonitrile-styrene (AS) resin, acrylonitrile-butadiene-styrene (ABS) resin, polyamide, polyether imide, polyether amideimide, polyimide, and polyphthalamide.

When a nitrogen-containing compound is used as a component other than the main-component resin, the type thereof is not particularly limited and examples thereof include nitrogen-containing compounds such as amine compound, ammonium salt, nitrate, and nitro compound not serving as a curing agent except the curing agent components, in addition to hexamethyl tetramine as the curing agent for the novolac-type phenol resin and aliphatic polyamine, aromatic polyamine, and dicyandiamide as the curing agents for the epoxy resin.

Regarding the nitrogen-containing compound, nitrogen-containing resins may or may not be contained in the main-component resin, one type of compound may be used, or two or more types of compounds may be used together.

The method of producing the resin composition is not particularly limited, and can employ (1) a method of melting and mixing the resin and other components, (2) a method of mixing the resin and other components by dissolution in a solvent, (3) a method of pulverizing and mixing the resin and other components, and the like.

The apparatus producing the resin composition is not particularly limited, but kneading apparatuses such as kneaders and a uniaxial or biaxial kneader can be used, for example, when the melting and mixing method is performed. When the dissolving and mixing method is performed, mixers such as a Henschel mixer and a disperser can be used. When the pulverizing and mixing method is performed, apparatuses such as a hammer mill and a jet mill can be used.

The resin composition obtained in this way may be a resin composition in which plural types of components are physically mixed alone or a resin composition of which a part chemically reacts by mechanical energy applied to the mixing (such as stirring and kneading) and thermal energy converted therefrom. Specifically, a mechanochemical reaction using mechanical energy or a chemical reaction using thermal energy may be carried out.

(Carbonization Process)

The resultant resin composition is then carbonized.

Regarding the conditions of the carbonization process, for example, the temperature is raised at a rate of 1°C/hour to 200°C/hour and the carbonization process can be performed by maintaining the resin composition at a temperature of 800°C to 3000°C under a pressure of 0.01 Pa to 101 kPa (1 atm) for 0.1 hours to 50 hours, preferably for 0.5 hours to 10 hours. The carbonization process can be preferably performed in an inert gas atmosphere of such as nitrogen and helium gas, in a substantially inert atmosphere in which a minute amount of oxygen is present in an inert gas, in a reduction gas atmosphere, or the like. Accordingly, it is possible to suppress thermal decomposition (oxidative decomposition) of a resin, thereby obtaining a desired negative-electrode material.

The conditions of temperature, time, and the like at the time of performing the carbonization process can be appropriately adjusted so as to optimize the characteristics of the negative-electrode material.

A preliminary carbonization process may be performed before performing the carbonization process.

The conditions of the preliminary carbonization process are not particularly limited, and an example thereof includes a temperature of 200°C to 1000°C and a time of 1 hour to 10 hours. In this way, by performing the preliminary carbonization process before performing the carbonization process, it is possible to prevent the pulverized resin composition from being re-fused in the carbonization process and thus to efficiently obtain a desired negative-electrode material, even when the resin composition is insolubilized and a process of pulverizing the resin composition is performed before performing the carbonization process.

A process of curing the resin composition may be performed before performing the preliminary carbonization process.

The method of the curing process is not particularly limited, but examples thereof include a method of thermally curing the resin composition by applying heat allowing a curing reaction to the resin composition or a method of using a curing agent together with a thermosetting resin. Accordingly, since the preliminary carbonization process can be performed substantially in a solid phase, the carbonization process or the preliminary carbonization process can be performed in a state where the structure of thermosetting resin is maintained to a certain extent, thereby controlling the structure or the characteristics of the negative-electrode material.

When the carbonization process or the preliminary carbonization process is performed, metal, pigment, lubricant, antistatic agent, oxidation inhibitor, and the like may be added to the resin composition to give desired characteristics to the negative-electrode material.

When the curing process or the preliminary carbonization process is performed, the processed material may be pulverized before performing the carbonization process. In this case, it is possible to reduce unbalance in thermal history in the carbonization process and to enhance uniformity in surface state of the resultant negative-electrode material. It is also possible to improve handling properties of the processed material.

(Occupation Ratio of Source Material in Space in which Carbonization Process is Performed)

In order to obtain the negative-electrode material according to this embodiment, it is important to appropriately adjust the occupation ratio of a source material in a space in which the carbonization process is performed. Specifically, the occupation ratio of a source material in a space in which the carbonization process is performed is preferably set to be equal to or less than 10.0 kg/m$^3$, more preferably to be equal to or less than 5.0 kg/m$^3$, and still more preferably to be equal to or less than 1.0 kg/m$^3$. Here, the space in which the carbonization process is performed generally represents an internal volume of a heat-treating furnace used for the carbonization process.

The reference of the occupation ratio of a source material in a space in which the carbonization process is performed in the related art ranges from about 100 kg/m$^3$ to 500 kg/m$^3$. Accordingly, in order to obtain the negative-electrode material according to this embodiment, it is important to set the occupation ratio of a source material in a space in which the carbonization process is performed to be lower than the reference in the related art.

By setting the occupation ratio of a source material in a space in which the carbonization process is performed to be equal to or less than the upper limit, it is thought that the reason for obtaining the negative-electrode material according to this embodiment is, although not clear, associated with efficient removal of gas generated from the source material (resin composition) in the carbonization process to the outside of the system.

From the above-mentioned procedure, the negative-electrode material according to this embodiment can be obtained.

<Negative-electrode Active Material>

The negative-electrode active material according to this embodiment will be described below.

The negative-electrode active material means a material from and to which alkali metal ions such as lithium ions can be input and output in an alkali metal ion battery. The negative-electrode active material according to this embodiment includes the above-mentioned negative-electrode material according to this embodiment. Accordingly, it is possible to provide a negative-electrode active material that can realize an alkali metal ion battery having a wide allowable state of charge.

The negative-electrode active material according to this embodiment may further include a negative-electrode material of a type different from the above-mentioned negative-electrode material. Examples of such a negative-electrode material include known negative-electrode materials such as silicon, silicon monoxide, and graphite materials.

Among these negative-electrode materials, the negative-electrode active material according to this embodiment preferably includes a graphite material in addition to the above-mentioned negative-electrode material according to this embodiment. Accordingly, it is possible to improve the charging and discharging capacity of the resultant alkali metal ion battery. As a result, it is possible to particularly improve the balance of the charging and discharging capacity and the charging and discharging efficiency of the resultant alkali metal ion battery.

The particle diameter (average particle diameter) of the used graphite material at the time of 50% accumulation in a volume-based cumulative distribution is preferably equal to or greater than 2 $\mu$m and equal to or less than 50 $\mu$m and more preferably equal to or greater than 5 $\mu$m and equal to or less than 30 $\mu$m. Accordingly, it is possible to produce a negative electrode with a high density while maintaining high charging and discharging efficiency.

<Negative Electrode of Alkali Metal Ion Battery and Alkali Metal Ion Battery>

A negative electrode of an alkali metal ion battery and an alkali metal ion battery according to this embodiment will be described below.

The negative electrode of an alkali metal ion battery (hereinafter, also simply referred to as "negative electrode") according to this embodiment is produced using the negative-electrode active material according to this embodiment. Accordingly, it is possible to provide a negative electrode having excellent storage characteristics and excellent charging and discharging capacity.

The alkali metal ion battery according to this embodiment is produced using the negative electrode according to this embodiment. Accordingly, it is possible to provide an alkali metal ion battery having excellent storage characteristics and excellent charging and discharging capacity.

The alkali metal ion battery according to this embodiment is, for example, a lithium ion battery or a sodium ion battery. A lithium ion battery will be exemplified in the following description.

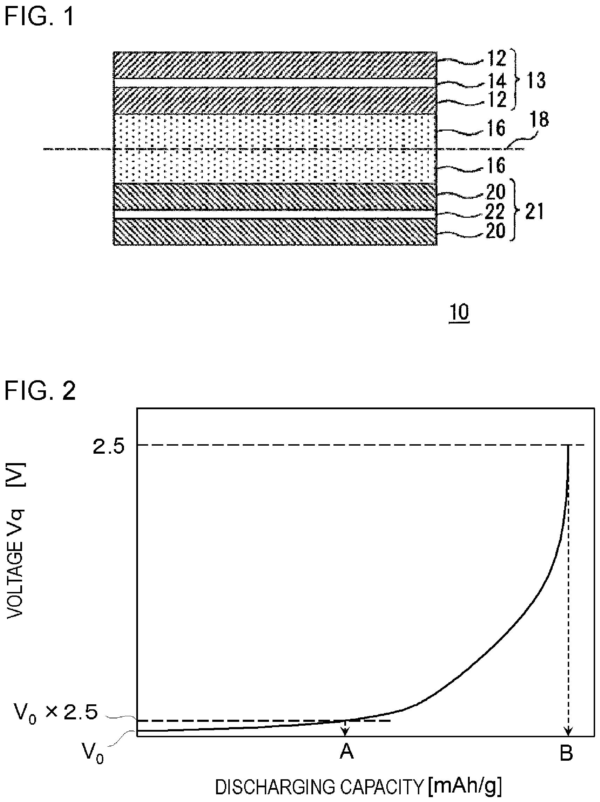

Fig. 1 is a schematic diagram illustrating an example of a lithium ion battery according to this embodiment.

As shown in Fig. 1, the lithium ion battery 10 includes a negative electrode 13, a positive electrode 21, an electrolyte solution 16, and a separator 18.

The negative electrode 13 includes a negative-electrode active material layer 12 and a negative-electrode collector 14, as shown in Fig. 1.

The negative-electrode collector 14 is not particularly limited, but a known negative-electrode collector can be used and, for example, a copper foil or a nickel foil can be used.

The negative-electrode active material layer 12 is formed of the negative-electrode active material according to this embodiment.

The negative electrode 13 can be produced, for example, as follows.

1 part by weight to 30 parts by weight of a generally-known organic polymer binder (for example, fluorine-based polymers such as polyvinylidene fluoride and polytetrafluoroethylene and rubber-like polymers such as styrene-butadiene rubber, butyl rubber, and butadiene rubber) and an appropriate amount of a viscosity-adjusting solvent (such as N-methyl-2-pyrrolidone and dimethylformamide) or water are added to 100 parts by weight of the negative-electrode active material and the resultant is kneaded, whereby a negative-electrode slurry is produced.

The resultant slurry is formed in a sheet shape or a pellet shape through compression molding or roll forming, whereby the negative-electrode active material layer 12 can be obtained. The resultant negative-electrode active material layer 12 and the negative-electrode collector 14 are stacked to obtain the negative electrode 13.

The negative electrode 13 may be produced by applying and drying the obtained negative-electrode slurry to the negative-electrode collector 14.

The negative electrode 13 may satisfy the same conditions as the conditions of the electrode of the half-cell or may satisfy other conditions.

The electrolyte solution 16 serves to fill a space between the positive electrode 21 and the negative electrode 13 and is a layer in which lithium ions move by charging and discharging.

The electrolyte solution 16 is not particularly limited and a generally-known electrolyte solution can be used. For example, a solution in which lithium salts as an electrolyte is dissolved in a non-aqueous solvent is used.

Examples of the non-aqueous solvent include cyclic esters such as propylene carbonate, ethylene carbonate, and $\Upsilon$-butyrolactone, chain-like esters such as dimethylcarbonate and diethylcarbonate, chain-like ethers such as dimethoxyethane, and mixtures thereof.

The electrolyte is not particularly limited and a generally-known electrolyte can be used. For example, lithium metal salts such as $LiClO_4$ and $LiPF_6$ can be used. The salts may be mixed with polyethylene oxide, polyacrylonitrile, or the like and the resultant may be used as a solid electrolyte.

The separator 18 is not particularly limited and a generally-known separator can be used. For example, porous films and unwoven fabrics formed of polyolefins such as polyethylene, polypropylene can be used.

The positive electrode 21 includes a positive-electrode active material layer 20 and a positive-electrode collector 22, as shown in Fig. 1.

The positive-electrode active material layer 20 is not particularly limited and can be formed of a generally-known positive-electrode active material. The positive-electrode active material is not particularly limited and examples thereof include complex oxides such as lithium cobalt oxide ($LiCoO_2$), lithium nickel oxide ($LiNiO_2$), and lithium manganese oxide ($LiMn_2O_4$) and conductive polymers such as polyaniline and polypyrrole.

The positive-electrode collector 22 is not particularly limited and a generally-known positive-electrode collector can be used. For example, an aluminum foil can be used.

The positive electrode 21 in this embodiment can be produced using a generally-known method of producing a positive electrode.

[Second Invention]

Hereinafter, an embodiment of a second invention will be described.

<Negative-electrode Material>

A negative-electrode material according to an embodiment is a carbonaceous negative-electrode material used in an alkali metal ion battery such as a lithium ion battery or a sodium ion battery and an average layer spacing $d_{002}$ of face (002) (hereinafter, referred to as "$d_{002}$") which is calculated by an X-ray diffraction method using CuKα radiation as a radiation source is equal to or greater than 0.340 nm, preferably equal to or greater than 0.350 nm, and more preferably equal to or greater than 0.365 nm. When $d_{002}$ is equal to or greater than the lower limit, destruction of a crystal structure less occurring due to repetition of doping and undoping of alkali metal ions of lithium or the like is suppressed and it is thus possible to improve the charging and discharging cycle characteristics of the negative-electrode material.

The upper limit of the average layer spacing $d_{002}$ is not particularly limited, but is typically equal to or less than 0.400 nm, preferably equal to or less than 0.395 nm, and more preferably equal to or less than 0.390 nm. When $d_{002}$ is equal to or less than the upper limit, it is possible to suppress irreversible capacity of the negative-electrode material.

A carbonaceous material having such an average layer spacing $d_{002}$ is generally called non-graphitizable carbon.

The negative-electrode material according to this embodiment includes non-graphitizable carbon. Accordingly, it is possible to improve charging and discharging cycle characteristics. The non-graphitizable carbon is an amorphous carbon material, unlike graphite materials. The non-graphitizable carbon can be normally obtained by carbonizing a resin composition.

(A/B)

When a half-cell, which has been manufactured under conditions to be described later, is charged and discharged under charging and discharging conditions to be described later, a voltage when the half-cell is discharged by 20 mAh/g from a fully-charged state is $V_0$ [V], a voltage in the course of discharging is $V_q$ [V], discharging capacity when $V_q$ reaches $V_0 \times 2.5$ is A, and discharging capacity when $V_q$ reaches 2.5 is B, the negative-electrode material according to this embodiment is specified such that A/B is equal to or greater than 0.38, preferably equal to or greater than 0.40, and more preferably equal to or greater than 0.42. The upper limit of A/B is not particularly limited and is generally equal to or less than 0.60.

By using a negative-electrode material in which A/B is equal to or greater than the lower limit for a negative electrode, it is possible to widen the allowable state of charge of an alkali metal ion battery.

In this specification, "mAh/g" represents the capacity per 1 g of the negative-electrode material.

A is not particularly limited, is normally equal to or greater than 130 mAh/g, preferably equal to or greater than 150 mAh/g, and more preferably equal to or greater than 180 mAh/g. The upper limit of A is not particularly limited, is preferably as high as possible, but is actually equal to or less than 250 mAh/g, and is generally equal to or less than 220 mAh/g.

B is not particularly limited, is normally equal to or greater than 350 mAh/g, preferably equal to or greater than 380 mAh/g, and more preferably equal to or greater than 420 mAh/g. The upper limit of B is not particularly limited, is preferably as high as possible, but is actually equal to or less than 700 mAh/g, and is generally equal to or less than 500 mAh/g.

(Technical Meaning of A/B)

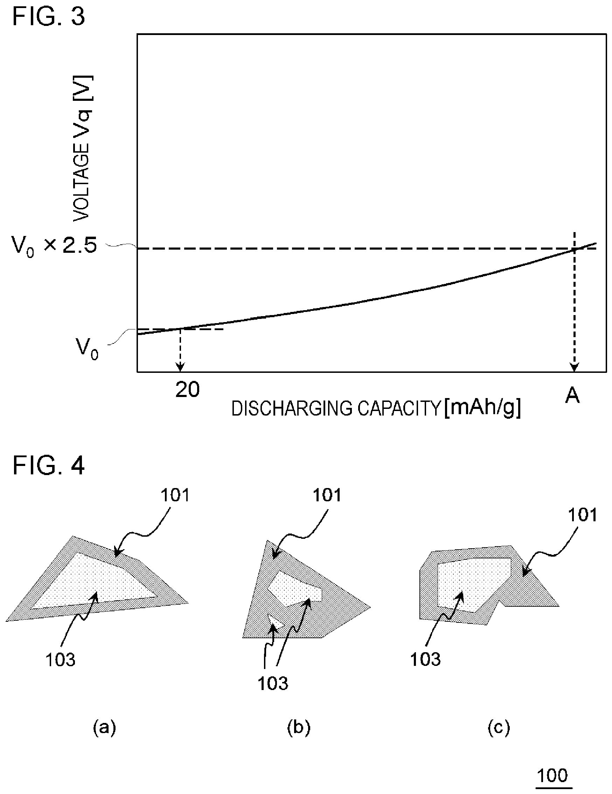

The technical meaning of A/B will be described below with reference to Figs. 2 and 3.

Fig. 2 is a schematic diagram illustrating an example of a discharging curve of the negative-electrode material according to an embodiment of the present invention. Fig. 3 is an enlarged view of a flat zone in Fig. 2. The "discharging capacity A when $V_q$ reaches $V_0 \times 2. 5$" means discharging capacity when the voltage $V_q$ of the half-cell is changed from 0 V to $V_0 \times 2.5$, and means discharging capacity of a flat zone in the discharging curve. On the other hand, the "discharging capacity B when $V_q$ reaches 2.5" means discharging capacity when the voltage $V_q$ of the half-cell is changed from 0 V to 2.5V which is a discharging cutoff voltage, and means the total capacity of the discharging capacity.

Therefore, A/B represents the ratio of the discharging capacity of the flat zone to the total discharging capacity and means that the larger the value of A/B becomes, the larger the occupation ratio of the flat zone becomes.

Since non-graphitizable carbon in the related art has small charging and discharging capacity of the flat zone, there is a problem in that the voltage greatly varies with the charging and discharging. Accordingly, an alkali metal ion battery using non-graphitizable carbon for a negative-electrode material is likely to reach the charging and discharging cutoff voltage and has a narrow allowable range of state of charge, and it is thus difficult to use the alkali metal ion battery.

Therefore, the inventors of the present invention intensively studied so as to increase the ratio of the discharging capacity of the flat zone to the total discharging capacity. As a result, it was found that the ratio of the discharging capacity of the flat zone to the total discharging capacity, that is, A/B, can be increased by appropriately adjusting the conditions for producing the negative-electrode material, thereby having made the present invention.

As described above, the negative-electrode material according to this embodiment has a higher ratio of the discharging capacity of the flat zone to the total discharging capacity than that in the related art. Since the voltage of the alkali metal ion battery is determined depending on the potential difference between the positive electrode and the negative electrode, the higher the ratio of the discharging capacity of the flat zone becomes, the wider the range in which the voltage of the alkali metal ion battery is kept equal to or greater than a predetermined voltage can become. Accordingly, it is possible to widen the allowable state of charge of the alkali metal ion battery obtained using the negative-electrode material according to this embodiment having a high ratio of the flat zone for the negative electrode.

(Conditions for Producing Half-Cell)

The conditions for producing the half-cell will be described below.

A negative electrode formed of the above-mentioned negative-electrode material is used. More specifically, an electrode formed of a composition in which a negative-electrode material, carboxymethyl cellulose, styrene-butadiene rubber, and acetylene black are mixed at a weight ratio of 100:1.5:3.0:2.0 is used.

The counter electrode is formed of metallic lithium.

A solution in which $LiPF_6$ is dissolved at a ratio of 1 M in a carbonate-based solvent (a mixed solvent in which ethylene carbonate and diethylcarbonate are mixed at a volume ratio of 1:1) is used as the electrolyte solution.

The negative electrode can be produced, for example, as described below.

First, a predetermined amount of negative-electrode material, carboxymethyl cellulose, styrene-butadiene rubber, acetylene black, and water are stirred and mixed to prepare slurry. The acquired slurry is applied to a copper foil as a collector, is subjected to a preliminary drying process at 60°C for 2 hours, and is then subjected to a vacuum drying process at 120°C for 15 hours. Subsequently, by cutting out the resultant in a predetermined size, a negative electrode formed of the negative-electrode material can be obtained.

The negative electrode has a disk shape with a diameter of 13 mm, the negative-electrode active material layer (a part of the negative electrode other than the collector) has a disk shape with a thickness of 50 $\mu$m, and the counter electrode (an electrode formed of metallic lithium) has a disk shape with a diameter of 12 mm and a thickness of 1 mm.

The half-cell can have a 2032-type coin cell shape.

(Charging and Discharging Conditions)

The charging and discharging conditions of the half-cell are as follows.

Measurement temperature: 25°
Charging method: constant-current constant-voltage method, Charging current: 25 mA/g, Charging voltage: 0 mV, Charging cutoff current: 2.5 mA/g
Discharging method: constant-current method, Discharging current: 25 mA/g, Discharging cutoff voltage: 2.5 V

The "charging" of the half-cell means that lithium ions are made to migrate from the electrode formed of metallic lithium to the electrode formed of the negative-electrode material with application of a voltage. The "discharging" means that lithium ions are made to migrate from the electrode formed of the negative-electrode material to the electrode formed of metallic lithium.

(Amount of Carbon Dioxide Gas Adsorbed)

In the negative-electrode material according to this embodiment, the amount of carbon dioxide gas adsorbed is preferably less than 10.0 ml/g, more preferably equal to or less than 8.0 ml/g, and still more preferably equal to or less than 6.0 ml/g. When the amount of carbon dioxide gas adsorbed is equal to or less than the upper limit, it is possible to further improve the storage characteristics of the negative-electrode material.

In the negative-electrode material according to this embodiment, the amount of carbon dioxide gas adsorbed is preferably equal to or greater than 0.05 ml/g, more preferably equal to or greater than 0.1 ml/g, still more preferably equal to or greater than 1.0 ml/g, still more preferably equal to or greater than 3.0 ml/g, and still more preferably greater than 5.0 ml/g. When the amount of carbon dioxide gas adsorbed is equal to or greater than the lower limit or greater than the lower limit, it is possible to further improve the charging capacity of lithium.

The amount of carbon dioxide gas adsorbed can be measured using a material obtained by vacuum-drying the negative-electrode material at 130°C for 3 hours or more using a vacuum dryer as a measurement sample and using ASAP-2000M made by Micromeritics Instrument Corporation.

An example of Patent Document 4 (Japanese Unexamined Patent Publication No. 10-223226) describes a negative-electrode material in which the amount of carbon dioxide gas adsorbed is equal to or greater than 10 ml/g and the $d_{002}$ is larger than that of the graphite material. Such a negative-electrode material is excellent in charging and discharging capacity.

However, according to the study of the inventors of the present invention, it is apparent that such a negative-electrode material is more likely to degrade in the air and is poorer in storage characteristics than the graphite material. Accordingly, it is necessary to store the carbonaceous material in an inert gas atmosphere or the like just after being manufactured and it is thus more difficult to treat the carbonaceous material than the graphite material.

In general, in a negative-electrode material having a $d_{002}$ which is larger than that of the graphite material, since fine pores are more likely to grow than the graphite material, moisture is likely to be adsorbed in the pores. When moisture is adsorbed, an irreversible reaction occurs between lithium with which the negative-electrode material is doped and the moisture and an increase in irreversible capacity at the time of initial charging or a degradation in charging and discharging cycle characteristics is caused as a result. For this reason, it is thought that the negative-electrode material having large $d_{002}$ is poorer in storage characteristics than the graphite material (for example, see Patent Document 3). Accordingly, in the related art, it has been tried to improve the storage characteristics by closing the pores of the negative-electrode material to reduce the equilibrium moisture adsorption (for example, see Patent Document 3).

However, the inventors of the present invention tested regeneration of the negative-electrode material by heating and drying the degraded negative-electrode material to remove moisture adsorbed in the fine pores, but could not completely regenerate the negative-electrode material. As disclosed in Patent Document 3, when the pores of the negative-electrode material are closed, there is a problem in that the charging and discharging capacity is lowered.

Therefore, the inventors of the present invention more intensively studied. As a result, it has been made to be clear that a negative-electrode material having more excellent storage characteristics and excellent charging and discharging capacity can be obtained by setting the amount of carbon dioxide gas adsorbed and the density of the negative-electrode material to specific ranges, thereby having made the present invention.

The negative-electrode material according to this embodiment is used as a negative-electrode material of an alkali metal ion battery such as a lithium ion battery or a sodium ion battery. Particularly, the negative-electrode material according to this embodiment is suitably used as a negative-electrode material of a lithium ion battery such as a lithium ion secondary battery.

(Pore Volume)

In the negative-electrode material according to this embodiment, the pore volume in which the pore diameter measured using a mercury intrusion method ranges from 0.003 $\mu$m to 5 $\mu$m is preferably less than 0.55 ml/g, more preferably equal to or less than 0.53 ml/g, and still more preferably equal to or less than 0.50 ml/g, from the viewpoint of improvement of a charging density.

In the negative-electrode material according to this embodiment, the pore volume in which the pore diameter measured using a mercury intrusion method ranges from 0.003 $\mu$m to 5 $\mu$m is preferably equal to or greater than 0.10 ml/g, more preferably equal to or greater than 0.20 ml/g, still more preferably equal to or greater than 0.30 ml/g, still more preferably equal to or greater than 0.40 ml/g, and still more preferably equal to or greater than 0.45 ml/g, from the viewpoint of reduction of irreversible capacity.

Here, the pore volume based on the mercury intrusion method can be measured using AUTOPORE III 9420 made by Micromeritics Instrument Corporation.

(Density)

In the negative-electrode material according to this embodiment, the ratio ($\rho^H/\rho^B$) of the density ($\rho^H$) measured using helium gas as a replacement medium to the density ($\rho^B$) measured using butanol as a replacement medium is preferably greater than 1.05, more preferably equal to or greater than 1.06, and still more preferably equal to or greater than 1.07.

The ratio $\rho^H/\rho^B$ is preferably less than 1.25, more preferably less than 1.20, and still more preferably less than 1.15.

When the ratio $\rho^H/\rho^B$ is equal to or greater than the lower limit, it is possible to further improve the charging and discharging capacity of an alkali metal ion battery obtained using the negative-electrode material. When the ratio $\rho^H/\rho^B$ is equal to or less than the upper limit, it is possible to further improve the storage characteristics of the negative-electrode material.

In this way, the negative-electrode material according to this embodiment in which ratio $\rho^H/\rho^B$ is in the above-mentioned range is more excellent in balance of the storage characteristics and the charging and discharging capacity.

The value of $\rho^H/\rho^B$ is an indicator of a pore structure of the negative-electrode material and means that the larger the value is, the more the number of pores which butanol cannot enter but helium can enter is. That is, the larger value of $\rho^H/\rho^B$ means that the more fine pores are present. When the number of pores which helium cannot enter is large, the value of $\rho^H/\rho^B$ decreases.

In the negative-electrode material according to this embodiment, the value of $\rho^H$ is preferably equal to or greater than 1.84 g/cm$^3$ and equal to or less than 2.10 g/cm$^3$, is more preferably equal to or greater than 1.85 g/cm$^3$ and equal to or less than 2.05 g/cm$^3$, and still more preferably equal to or greater than 1.85 g/cm$^3$ and equal to or less than 2.00 g/cm$^3$, from the viewpoint of control of the pore size.

In the negative-electrode material according to this embodiment, the value of $\rho^B$ is preferably equal to or greater than 1.50 g/cm$^3$ and equal to or less than 1.80 g/cm$^3$, is more preferably equal to or greater than 1.55 g/cm$^3$ and equal to or less than 1.78 g/cm$^3$, and still more preferably equal to or greater than 1.60 g/cm$^3$ and equal to or less than 1.75 g/cm$^3$, from the viewpoint of control of the pore size.

(Reflectance)

When the negative-electrode material according to this embodiment is embedded in an epoxy resin, the epoxy resin is cured, the resultant cured material is cut and polished to expose a cross-section of the negative-electrode material, and the cross-section is observed in a bright field with 1000 times magnification using an optical microscope, a first region and a second region having different reflectance ratios are observed in the cross-section of the negative-electrode material.

In this way, the negative-electrode material according to this embodiment in which the first region and the second region having different reflectance ratios are observed is excellent in storage characteristics and charging and discharging capacity. Although the reason why the storage characteristics and the charging and discharging capacity are more excellent is not clear, it is thought that the region contributing to the increase in capacity and the region contributing to the improvement in storage characteristics are formed in appropriate shapes.

The first region and the second region having different reflectance ratios will be described below in more detail with reference to Fig. 4.

Fig. 4 is a schematic diagram illustrating examples of a cross-sectional structure of a negative-electrode material 100 according to an embodiment of the present invention.

In the negative-electrode material 100 according to this embodiment, as shown in (a) to (c) of Fig. 4, for example, it is preferable that a first region 101 and a second region 103 have constant reflectance ratios, respectively, and the reflectance ratio discontinuously varies at the interface between the first region 101 and the second region 103.

In the negative-electrode material 100 according to this embodiment, as shown in (a) to (c) of Fig. 4, for example, it is preferable that the first region 101 exists along the outer edge of the cross-section of the negative-electrode material 100 and the second region 103 exists inside the first region 101.

In the negative-electrode material 100 according to this embodiment, for example, it is preferable that the reflectance ratio (B) of the second region 103 is larger than the reflectance ratio (A) of the first region 101. That is, when observed using an optical microscope, it is preferable that the second region 103 is observed to be whiter (brighter) than the first region 101.

(Moisture Content Measured Using Karl Fischer's Coulometric Titration Method)

In the negative-electrode material according to this embodiment, when a moisture content generated by maintaining the negative-electrode material under conditions of a temperature of 40°C and a relative humidity of 90 %RH for 120 hours, maintaining the negative-electrode material under conditions of a temperature of 130°C and a nitrogen atmosphere for 1 hour to preliminarily dry the negative-electrode material, and then maintaining the preliminarily-dried negative-electrode material at 200°C for 30 minutes is measured using a Karl Fischer's coulometric titration method, the moisture content generated from the preliminarily-dried negative-electrode material is preferably equal to or less than 0.20 wt% with respect to 100 wt% of the preliminarily-dried negative-electrode material, more preferably equal to or less than 0.15 wt%, and still more preferably equal to or less than 0.10 wt%.

By setting the moisture content to be equal to or less than the upper limit, it is possible to further suppress degradation of the negative-electrode material even when the negative-electrode material according to this embodiment is stored in the air for a long time. The moisture content means an indicator of an amount of chemisorbed water to be desorbed by maintaining the negative-electrode material at 200°C for 30 minutes.

The lower limit of the moisture content is not particularly limited, but is generally equal to or greater than 0.01 wt%.

When the moisture content measured using the Karl Fischer's coulometric titration method is equal to or less than the upper limit, it is thought that the reason for further suppressing the degradation of the negative-electrode material is that the less moisture content the negative material has, the more difficult it is to cause adsorption of moisture, although not apparent.

From the study of the inventors of the present invention, it has been made to be clear that moisture to be adsorbed in the negative-electrode material can be roughly classified into physisorbed water and chemisorbed water and the smaller amount of chemisorbed water the negative material has, the more excellent the storage characteristics and the charging and discharging capacity are. That is, the inventors found that the scale of the amount of chemisorbed water is effective as a design guideline for realizing the negative-electrode material having excellent storage characteristics and charging and discharging capacity.

Here, the physisorbed water means adsorbed water which is physically present as water molecules on the surface of the negative-electrode material. On the other hand, the chemisorbed water means adsorbed water which coordinates with or chemically bonds to a first layer of the surface of the negative-electrode material.

It is thought that the surface of a negative-electrode material having a small amount of chemisorbed water has a structure which is difficult to coordinate with or chemically bond to moisture or a structure which is difficult to change to such a structure even when the negative-electrode material is maintained in the air. Therefore, by setting the moisture content to be equal to or less than the upper limit, it is thought that it is difficult to cause adsorption of moisture or to change the surface structure even when the negative-electrode material is stored in the air for a long time, thereby improving the storage characteristic.

In this embodiment, moisture desorbed from the negative-electrode material in the preliminary drying in which the negative-electrode material is maintained under the conditions of a temperature of 130°C and a nitrogen atmosphere for 1 hour is called physisorbed water, and moisture desorbed from the negative-electrode material in the process in which the preliminarily-dried negative-electrode material is maintained at 200°C for 30 minutes is called chemisorbed water.

(Crystallite Size)

In the negative-electrode material according to this embodiment, the crystallite size in the c-axis direction (hereinafter, also abbreviated as "$Lc_{(002)}$") calculated using an X-ray diffraction method is preferably equal to or less than 5 nm, more preferably equal to or less than 3 nm, and still more preferably equal to or less than 2 nm.

(Average Particle Diameter)

In the negative-electrode material according to this embodiment, the particle diameter ($D_{50}$, average particle diameter) at the time of 50% accumulation in a volume-based cumulative distribution is preferably equal to or greater than 1 $\mu$m and equal to or less than 50 $\mu$m and more preferably equal to or greater than 2 $\mu$m and equal to or less than 30 $\mu$m. Accordingly, it is possible to produce a high-density negative electrode.

(Specific Surface Area)

In the negative-electrode material according to this embodiment, the specific surface area measured using a three-point BET method in nitrogen adsorption is preferably equal to or greater than 1 $m^2$/g and equal to or less than 15 $m^2$/g and more preferably equal to or greater than 3 $m^2$/g and equal to or less than 8 $m^2$/g.

By setting the specific surface area measured using the three-point BET method in nitrogen adsorption to be equal to or less than the upper limit, it is possible to further suppress irreversible reaction of the negative-electrode material and the electrolyte.

By setting the specific surface area measured using the three-point BET method in nitrogen adsorption to be equal to or greater than the lower limit, it is possible to obtain appropriate permeability of the electrolyte into the negative-electrode material.

The method of calculating the specific surface area is the same as described in the negative-electrode material according to the first invention and thus description thereof will not be repeated.

(Halogen Content)

In the negative-electrode material according to this embodiment, a halogen content is preferably less than 50 ppm, more preferably equal to or less than 30 ppm, and still more preferably equal to or less than 10 ppm. When the halogen content is equal to or less than the upper limit, it is possible to further improve the storage characteristics of the negative-electrode material. The halogen content can be controlled by adjusting a halogen gas concentration in the process gas used at the time of carbonization or the amount of halogen included in the source material of the negative-electrode material. The halogen content can be calculated by adsorbing the halogen hydrogen gas in combustion gas, which has been produced by combusting the negative-electrode material, in sodium hydroxide and then quantifying the halogen content in the solution using an ion chromatographic analysis apparatus.

<Method of Producing Negative-Electrode Material>

A negative-electrode material according to the second invention can be produced on the basis of the method of producing the negative-electrode material according to the first invention. Details thereof will not be repeated.

<Negative-electrode Active Material>

A negative-electrode active material according to the second invention is the same as the negative-electrode active material according to the first invention, except that the negative-electrode material according to the second invention is used as the negative-electrode material. Details thereof will not be repeated.

<Negative Electrode of Alkali Metal Ion Battery and Alkali Metal Ion Battery>

A negative electrode of an alkali metal ion battery and an alkali metal ion battery according to the second invention are the same as the negative electrode of an alkali metal ion battery and the alkali metal ion battery according to the first invention, except that the negative-electrode material according to the second invention is used as the negative-electrode active material.

The negative electrode of an alkali metal ion battery and the alkali metal ion battery according to the second invention can be manufactured on the basis of the method of producing the negative electrode of an alkali metal ion battery and the alkali metal ion battery according to the first invention. Details thereof will not be repeated.

[Third Invention]

Hereinafter, an embodiment of a third invention will be described.

<Negative-electrode Material>

A negative-electrode material according to an embodiment is a carbonaceous negative-electrode material used in an alkali metal ion battery such as a lithium ion battery or a sodium ion battery and an average layer spacing $d_{002}$ of face (002) (hereinafter, referred to as "$d_{002}$") thereof calculated by an X-ray diffraction method using CuK$\alpha$ radiation as a radiation source is equal to or greater than 0.340 nm, preferably equal to or greater than 0.350 nm, and more preferably equal to or greater than 0.365 nm. When $d_{002}$ is equal to or greater than the lower limit, destruction of a crystal structure less occurring due to repetition of doping and undoping of alkali metal ions of lithium or the like is suppressed and it is thus possible to improve the charging and discharging characteristics of the negative-electrode material.

The upper limit of the average layer spacing $d_{002}$ is not particularly limited, but is typically equal to or less than 0.400 nm, preferably equal to or less than 0.395 nm, and more preferably equal to or less than 0.390 nm. When $d_{002}$ is equal to or less than the upper limit, it is possible to suppress irreversible capacity of the negative-electrode material.

A carbonaceous material having such an average layer spacing $d_{002}$ is generally called non-graphitizable carbon.

In the negative-electrode material according to this embodiment, the ratio ($\rho^H/\rho^B$) of the density ($\rho^H$) measured using helium gas as a replacement medium to the density ($\rho^B$) measured using butanol as a replacement medium is preferably greater than 1.05, more preferably equal to or greater than 1.06, and still more preferably equal to or greater than 1.07.

The ratio $\rho^H/\rho^B$ is preferably less than 1.25, more preferably less than 1.20, and still more preferably less than 1.15.

When the ratio $\rho^H/\rho^B$ is equal to or greater than the lower limit, it is possible to further improve the charging and discharging capacity of an alkali metal ion battery obtained using the negative-electrode material. When the ratio $\rho^H/\rho^B$ is equal to or less than the upper limit, it is possible to further improve the storage characteristics of the negative-electrode material.

In this way, the negative-electrode material according to this embodiment in which ratio $\rho^H/\rho^B$ is in the above-mentioned range is more excellent in balance of the storage characteristics and the charging and discharging capacity.

The value of $\rho^H/\rho^B$ is an indicator of a pore structure of the negative-electrode material and means that the larger the value is, the more the number of pores which butanol cannot enter but helium can enter is. That is, the larger value of $\rho^H/\rho^B$ means that the more fine pores are present. When the number of pores which helium cannot enter is large, the value of $\rho^H/\rho^B$ decreases.

In the negative-electrode material according to this embodiment, the value of $\rho^H$ is preferably equal to or greater than 1.84 g/cm$^3$ and equal to or less than 2.10 g/cm$^3$, is more preferably equal to or greater than 1.85 g/cm$^3$ and equal to or less than 2.05 g/cm$^3$, and still more preferably equal to or greater than 1.85 g/cm$^3$ and equal to or less than 2.00 g/cm$^3$, from the viewpoint of control of the pore size.

In the negative-electrode material according to this embodiment, the value of $\rho^B$ is preferably equal to or greater than 1.50 g/cm$^3$ and equal to or less than 1.80 g/cm$^3$, is more preferably equal to or greater than 1.55 g/cm$^3$ and equal to or less than 1.78 g/cm$^3$, and still more preferably equal to or greater than 1.60 g/cm$^3$ and equal to or less than 1.75 g/cm$^3$, from the viewpoint of control of the pore size.

Although the reason why the negative-electrode material according to this embodiment has d002 equal to or greater than 0.340nm but has excellent storage characteristics and excellent charging and discharging capacity is not clear, it is though that fine structures suitable for occlusion of lithium are formed and the surface of the negative-electrode material has a structure in which it is difficult to cause adsorption of chemisorbed water by setting the value of $\rho^H/\rho^B$ to the above-mentioned range. That is, by setting the value of $\rho^H/\rho^B$ to the above-mentioned range, it is thought that the region contributing to the increase in capacity and the region contributing to the improvement in storage characteristics are formed in appropriate shapes.

An example of Patent Document 2 (Japanese Unexamined Patent Publication No. 8-115723) describes a negative-electrode material in which the value of ($\rho_H/\rho_B$) is equal to or greater than 1.25 and the $d_{002}$ is larger than that of the graphite material. Such a negative-electrode material is excellent in charging and discharging capacity.

However, according to the study of the inventors of the present invention, it is apparent that such a negative-electrode material is more likely to degrade in the air and is poorer in storage characteristics than the graphite material. Accordingly, it is necessary to store the carbonaceous material in an inert gas atmosphere or the like just after being manufactured and it is thus more difficult to treat the carbonaceous material than the graphite material.

In general, in a negative-electrode material having a $d_{002}$ which is larger than that of the graphite material, since fine pores are more likely to grow than the graphite material, moisture is likely to be adsorbed in the pores. When moisture is adsorbed, an irreversible reaction occurs between lithium with which the negative-electrode material is doped and the moisture and an increase in irreversible capacity at the time of initial charging or a degradation in charging and discharging cycle characteristics is caused as a result. For this reason, it is thought that the negative-electrode material having large $d_{002}$ is poorer in storage characteristics than the graphite material (for example, see Patent Document 3). Accordingly, in the related art, it has been tried to improve the storage characteristics by closing the pores of the negative-electrode material to reduce the equilibrium moisture adsorption (for example, see Patent Document 3).

However, the inventors of the present invention tested regeneration of the negative-electrode material by heating and drying the degraded negative-electrode material to remove moisture adsorbed in the fine pores, but could not completely regenerate the negative-electrode material. As disclosed in Patent Document 3, when the pores of the negative-electrode material are closed, there is a problem in that the charging and discharging capacity is lowered.

Therefore, the inventors of the present invention more intensively studied. As a result, it has been made to be clear that a negative-electrode material having more excellent storage characteristics and excellent charging and discharging capacity can be obtained by setting the values of ($\rho^H/\rho^B$) and $\rho^H$ of the negative-electrode material to specific ranges, thereby having made the present invention.

The negative-electrode material according to this embodiment is used as a negative-electrode material of an alkali metal ion battery such as a lithium ion battery or a sodium ion battery. Particularly, the negative-electrode material according to this embodiment is suitably used as a negative-electrode material of a lithium ion battery such as a lithium ion secondary battery.

When the negative-electrode material according to this embodiment is embedded in an epoxy resin, the epoxy resin is cured, the resultant cured material is cut and polished to expose a cross-section of the negative-electrode material, and the cross-section is observed in a bright field with 1000 times magnification using an optical microscope, a first region and a second region having different reflectance ratios are observed in the cross-section of the negative-electrode material.

In this way, the negative-electrode material according to this embodiment in which the first region and the second region having different reflectance ratios are observed is excellent in storage characteristics and charging and discharging capacity.

The first region and the second region having different reflectance ratios will be described below in more detail with reference to Fig. 4.

Fig. 4 is a schematic diagram illustrating examples of a cross-sectional structure of a negative-electrode material 100 according to an embodiment of the present invention.

In the negative-electrode material 100 according to this embodiment, as shown in (a) to (c) of Fig. 4, for example, it is preferable that a first region 101 and a second region 103 have constant reflectance ratios, respectively, and the reflectance ratio discontinuously varies at the interface between the first region 101 and the second region 103.

In the negative-electrode material 100 according to this embodiment, as shown in (a) to (c) of Fig. 4, for example, it is preferable that the first region 101 exists along the outer edge of the cross-section of the negative-electrode material 100 and the second region 103 exists inside the first region 101.

In the negative-electrode material 100 according to this embodiment, for example, it is preferable that the reflectance ratio (B) of the second region 103 is larger than the reflectance ratio (A) of the first region 101. That is, when observed using an optical microscope, it is preferable that the second region 103 is observed to be whiter (brighter) than the first region 101.

(Moisture Content Measured Using Karl Fischer's Coulometric Titration Method)

In the negative-electrode material according to this embodiment, when a moisture content generated by maintaining the negative-electrode material under conditions of a temperature of 40°C and a relative humidity of 90 %RH for 120 hours, maintaining the negative-electrode material under conditions of a temperature of 130°C and a nitrogen atmosphere for 1 hour to preliminarily dry the negative-electrode material, and then maintaining the preliminarily-dried negative-electrode material at 200°C for 30 minutes is measured using a Karl Fischer's coulometric titration method, the moisture content generated from the preliminarily-dried negative-electrode material is preferably equal to or less than 0.20 wt% with respect to 100 wt% of the preliminarily-dried negative-electrode material, more preferably equal to or less than 0.15 wt%, and still more preferably equal to or less than 0.10 wt%.

By setting the moisture content to be equal to or less than the upper limit, it is possible to further suppress degradation of the negative-electrode material even when the negative-electrode material according to this embodiment is stored in the air for a long time. The moisture content means an indicator of an amount of chemisorbed water to be desorbed by maintaining the negative-electrode material at 200°C for 30 minutes.

The lower limit of the moisture content is not particularly limited, but is generally equal to or greater than 0.01 wt%.

When the moisture content measured using the Karl Fischer's coulometric titration method is equal to or less than the upper limit, it is thought that the reason for further suppressing the degradation of the negative-electrode material is that the less moisture content the negative material has, the more difficult it is to cause adsorption of moisture, although not apparent.

From the study of the inventors of the present invention, it has been made to be clear that moisture to be adsorbed in the negative-electrode material can be roughly classified into physisorbed water and chemisorbed water and the smaller amount of chemisorbed water the negative material has, the more excellent the storage characteristics and the charging and discharging capacity are. That is, the inventors found that the scale of the amount of chemisorbed water is effective as a design guideline for realizing the negative-electrode material having excellent storage characteristics and charging and discharging capacity.

Here, the physisorbed water means adsorbed water which is physically present as water molecules on the surface of the negative-electrode material. On the other hand, the chemisorbed water means adsorbed water which coordinates with or chemically bonded to a first layer of the surface of the negative-electrode material.

It is thought that the surface of a negative-electrode material having a small amount of chemisorbed water has a structure which is difficult to coordinate with or chemically bond to moisture or a structure which is difficult to change to such a structure even when the negative-electrode material is maintained in the air. Therefore, by setting the moisture content to be equal to or less than the upper limit, it is thought that it is difficult to cause adsorption of moisture or to change the surface structure even when the negative-electrode material is stored in the air for a long time, thereby improving the storage characteristic.

In this embodiment, moisture desorbed from the negative-electrode material in the preliminary drying in which the negative-electrode material is maintained under the conditions of a temperature of 130°C and a nitrogen atmosphere for 1 hour is called physisorbed water, and moisture desorbed from the negative-electrode material in the process in which the preliminarily-dried negative-electrode material is maintained at 200°C for 30 minutes is called chemisorbed water.

(Crystallite Size)

In the negative-electrode material according to this embodiment, the crystallite size in the c-axis direction (hereinafter, also abbreviated as "$Lc_{(002)}$") calculated using an X-ray diffraction method is preferably equal to or less than 5 nm, more preferably equal to or less than 3 nm, and still more preferably equal to or less than 2 nm.

(Average Particle Diameter)

In the negative-electrode material according to this embodiment, the particle diameter ($D_{50}$, average particle diameter) at the time of 50% accumulation in a volume-based cumulative distribution is preferably equal to or greater than 1 $\mu$m and equal to or less than 50 $\mu$m and more preferably equal to or greater than 2 $\mu$m and equal to or less than 30 $\mu$m. Accordingly, it is possible to produce a high-density negative electrode.

(Specific Surface Area)

In the negative-electrode material according to this embodiment, the specific surface area measured using a three-point BET method in nitrogen adsorption is preferably equal to or greater than 1 $m^2$/g and equal to or less than 15 $m^2$/g and more preferably equal to or greater than 3 $m^2$/g and equal to or less than 8 $m^2$/g.

By setting the specific surface area measured using the three-point BET method in nitrogen adsorption to be equal to or less than the upper limit, it is possible to further suppress irreversible reaction of the negative-electrode material and the electrolyte.

By setting the specific surface area measured using the three-point BET method in nitrogen adsorption to be equal to or greater than the lower limit, it is possible to obtain appropriate permeability of the electrolyte into the negative-electrode material.

The method of calculating the specific surface area is the same as described in the negative-electrode material according to the first invention and thus description thereof will not be repeated.

(Amount of Carbon Dioxide Gas Adsorbed)

In the negative-electrode material according to this embodiment, the amount of carbon dioxide gas adsorbed is preferably less than 10.0 ml/g, more preferably equal to or less than 8.0 ml/g, and still more preferably equal to or less than 6.0 ml/g. When the amount of carbon dioxide gas adsorbed is equal to or less than the upper limit, it is possible to further improve the storage characteristics of the negative-electrode material.

In the negative-electrode material according to this embodiment, the amount of carbon dioxide gas adsorbed is preferably equal to or greater than 0.05 ml/g, more preferably equal to or greater than 0.1 ml/g, still more preferably equal to or greater than 1.0 ml/g, still more preferably equal to or greater than 3.0 ml/g, and still more preferably greater than 5.0 ml/g. When the amount of carbon dioxide gas adsorbed is equal to or greater than the lower limit or greater than the lower limit, it is possible to further improve the charging capacity of lithium.

The amount of carbon dioxide gas adsorbed can be measured using a material obtained by vacuum-drying the negative-electrode material at 130°C for 3 hours or more using a vacuum dryer as a measurement sample and using ASAP-2000M made by Micromeritics Instrument Corporation.

(Pore Volume)

In the negative-electrode material according to this embodiment, the pore volume in which the pore diameter measured using a mercury intrusion method ranges from 0.003 $\mu$m to 5 $\mu$m is preferably less than 0.55 ml/g, more preferably equal to or less than 0.53 ml/g, and still more preferably equal to or less than 0.50 ml/g, from the viewpoint of improvement of a charging density.

In the negative-electrode material according to this embodiment, the pore volume in which the pore diameter measured using a mercury intrusion method ranges from 0.003 $\mu$m to 5 $\mu$m is preferably equal to or greater than 0.10 ml/g, more preferably equal to or greater than 0.20 ml/g, still more preferably equal to or greater than 0.30 ml/g, still more preferably equal to or greater than 0.40 ml/g, and still more preferably equal to or greater than 0.45 ml/g, from the viewpoint of reduction of irreversible capacity.

Here, the pore volume based on the mercury intrusion method can be measured using AUTOPORE III 9420 made by Micromeritics Instrument Corporation.

(Discharging Capacity)

In the negative-electrode material according to this embodiment, the discharging capacity when a half-cell produced under the conditions to be described in the first invention has been subjected to charging and discharging under charging and discharging conditions to be described in the first invention is preferably equal to or greater than 360 mAh/g, more preferably equal to or greater than 380 mAh/g, still more preferably equal to or greater than 400 mAh/g, and still more preferably equal to or greater than 420 mAh/g. The upper limit of the discharging capacity is not particularly limited and is preferably higher. However, the discharging capacity is realistically equal to or less than 700 mAh/g and is generally equal to or less than 500 mAh/g. In this specification, "mAh/g" represents the capacity per 1 g of the negative-electrode material.

(Conditions for Producing Half-Cell)

The conditions for producing the half-cell will be described below.

A negative electrode formed of the above-mentioned negative-electrode material is used. More specifically, an electrode formed of a composition in which a negative-electrode material, carboxymethyl cellulose, styrene-butadiene rubber, and acetylene black are mixed at a weight ratio of 100:1.5:3.0:2.0 is used.

The counter electrode is formed of metallic lithium.

A solution in which $LiPF_6$ is dissolved at a ratio of 1 M in a carbonate-based solvent (a mixed solvent in which ethylene carbonate and diethylcarbonate are mixed at a volume ratio of 1:1) is used as the electrolyte solution.

The negative electrode can be produced, for example, as described below.

First, a predetermined amount of negative-electrode material, carboxymethyl cellulose, styrene-butadiene rubber, acetylene black, and water are stirred and mixed to prepare slurry. The acquired slurry is applied to a copper foil as a collector, is subjected to a preliminary drying process at 60°C for 2 hours, and is then subjected to a vacuum drying process at 120°C for 15 hours. Subsequently, by cutting out the resultant in a predetermined size, a negative electrode formed of the negative-electrode material can be obtained.

The negative electrode has a disk shape with a diameter of 13 mm, the negative-electrode active material layer (a part of the negative electrode other than the collector) has a disk shape with a thickness of 50 $\mu$m, and the counter electrode (an electrode formed of metallic lithium) has a disk shape with a diameter of 12 mm and a thickness of 1 mm.

The half-cell can have a 2032-type coin cell shape.

(Charging and Discharging Conditions)

The charging and discharging conditions of the half-cell are as follows.

Measurement temperature: 25°
Charging method: constant-current constant-voltage method, Charging current: 25 mA/g, Charging voltage: 0 mV, Charging cutoff current: 2.5 mA/g
Discharging method: constant-current method, Discharging current: 25 mA/g, Discharging cutoff voltage: 2.5 V

The "charging" of the half-cell means that lithium ions are made to migrate from the electrode formed of metallic lithium to the electrode formed of the negative-electrode material with application of a voltage. The "discharging" means that lithium ions are made to migrate from the electrode formed of the negative-electrode material to the electrode formed of metallic lithium.

<Method of Producing Negative-Electrode Material>

A negative-electrode material according to the third invention can be produced on the basis of the method of producing the negative-electrode material according to the first invention. Details thereof will not be repeated.

<Negative-electrode Active Material>

A negative-electrode active material according to the third invention is the same as the negative-electrode active material according to the first invention, except that the negative-electrode material according to the third invention is used as the negative-electrode material. Details thereof will not be repeated.

<Negative Electrode of Alkali Metal Ion Battery and Alkali Metal Ion Battery>

A negative electrode of an alkali metal ion battery and an alkali metal ion battery according to the third invention are the same as the negative electrode of an alkali metal ion battery and the alkali metal ion battery according to the first invention, except that the negative-electrode material according to the third invention is used as the negative-electrode material.

The negative electrode of an alkali metal ion battery and the alkali metal ion battery according to the third invention can be manufactured on the basis of the method of producing the negative electrode of an alkali metal ion battery and the alkali metal ion battery according to the first invention. Details thereof will not be repeated.

While embodiments of the present invention have been described above, the embodiments are only an example of the present invention and various configurations other than described above may be employed.

The present invention is not limited to the above-mentioned embodiments, but modifications, improvements, and the like within a range in which the object of the present invention can be achieved are included in the present invention.

The above-mentioned inventions of the present invention can be combined as long as details thereof are not contradictory to each other.

In association with the above-mentioned embodiments of the inventions, the present invention provides the following negative-electrode materials, negative-electrode active materials, negative-electrodes, and alkali metal ion batteries.

[A1] A negative-electrode material for a lithium ion battery, including amorphous carbon,
wherein when a half-cell, which is manufactured using the negative-electrode material as a negative electrode, using metallic lithium as a counter electrode, and using a solution in which $LiPF_6$ is dissolved in a carbonate-based solvent at a ratio of 1 M as an electrolyte solution, is charged at 25°C using a constant-current constant-voltage method under conditions of a charging current of 25 mA/g, a charging voltage of 0 mV, and a charging cutoff current of 2.5 mA/g and is then discharged using a constant-current method under conditions of a discharging current of 25 mA/g and a discharging cutoff voltage of 2.5 V, a voltage when the half-cell is discharged by 20 mAh/g from a fully-charged state is $V_0$ [V], a voltage in the course of discharging is $V_q$ [V], discharging capacity when $V_q$ reaches $V_0 \times 2.5$ is A, and discharging capacity when $V_q$ reaches 2.5 is B, A/B is equal to or greater than 0.38.
[A2] The negative-electrode material according to [A1],
wherein A is equal to or greater than 130 mAh/g.
[A3] The negative-electrode material according to [A1] or [A2],
wherein B is equal to or greater than 350 mAh/g.
[A4] A negative-electrode material for a lithium ion battery, including amorphous carbon,
wherein when a half-cell, which is manufactured using the negative-electrode material as a negative electrode, using metallic lithium as a counter electrode, and using a solution in which $LiPF_6$ is dissolved in a carbonate-based solvent at a ratio of 1 M as an electrolyte solution, is charged at 25°C using a constant-current constant-voltage method under conditions of a charging current of 25 mA/g, a charging voltage of 0 mV, and a charging cutoff current of 2.5 mA/g and is then discharged using a constant-current method under conditions of a discharging current of 25 mA/g and a discharging cutoff voltage of 2.5 V, a voltage when the half-cell is discharged by 20 mAh/g from a fully-charged state is $V_0$ [V], a voltage in the course of discharging is $V_q$ [V], and discharging capacity when $V_q$ reaches $V_0 \times 2.5$ is A, A is equal to or greater than 130 mAh/g.
[A5] The negative-electrode material according to [A4],
wherein discharging capacity when $V_q$ reaches 2.5 is B, B is equal to or greater than 350 mAh/g.
[A6] The negative-electrode material according to any one of [A1] to [A5],
wherein the negative-electrode material is obtained by carbonizing a resin composition.
[A7] A negative-electrode active material including the negative-electrode material according to any one of [A1] to [A6].
[A8] The negative-electrode active material according to [A7], further including a type of negative-electrode material different from the negative-electrode material.
[A9] The negative-electrode active material according to [A8],
wherein the different type of negative-electrode material is a graphite material.
[A10] A negative electrode for a lithium ion battery including the negative-electrode active material according to any one of [A7] to [A9].
[A11] A lithium ion battery including at least the negative electrode for a lithium ion battery according to [A10], an electrolyte, and a positive electrode.

[B1] A negative-electrode material for a lithium ion battery of which an average layer spacing $d_{002}$ of face (002) calculated by an X-ray diffraction method using CuK$\alpha$ radiation as a radiation source is equal to or greater than 0.340 nm,
wherein the negative-electrode material is maintained under conditions of a temperature of 40°C and a relative humidity of 90 %RH for 120 hours,

(A) a step of maintaining the negative-electrode material under conditions of a temperature of 130°C and a nitrogen atmosphere for 1 hour and (B) a step of raising the temperature of the negative-electrode material subjected to the step of (A) at 10°C/min from 40°C to 540°C under the nitrogen atmosphere and measuring a decrease in weight of the negative-electrode material are sequentially performed using a thermogravimetric apparatus, and

when a weight of the negative-electrode material after the step of (A) is X, a weight of the negative-electrode material at 150°C in the step of (B) is $Y_1$, and a weight of the negative-electrode material at 250 °C in the step of (B) is $Y_2$, a chemisorbed water ratio A defined as $100 \times (Y_1 - Y_2)/X$ is equal to or less than 0.5%.
[B2] The negative-electrode material for a lithium ion battery according to [B1],
wherein $100 \times (X - Y_2)/X$ is equal to or less than 0.6%.
[B3] The negative-electrode material for a lithium ion battery according to [B1] or [B2],
wherein when a weight of the negative-electrode material at 500°C in the step of (B) is $Y_3$, a chemisorbed water ratio B defined as $100 \times (Y_2 - Y_3)/X$ is equal to or less than 1.0%.
[B4] The negative-electrode material for a lithium ion battery according to [B3],
wherein $100 \times (X - Y_3)/X$ is equal to or less than 1.6%.
[B5] The negative-electrode material for a lithium ion battery according to any one of [B1] to [B4],
wherein when a moisture content generated by maintaining the negative-electrode material under conditions of a temperature of 40°C and a relative humidity of 90 %RH for 120 hours, maintaining the negative-electrode material under conditions of a temperature of 130°C and a nitrogen atmosphere for 1 hour to preliminarily dry the negative-electrode material, and maintaining the preliminarily-dried negative-electrode material at 200°C for 30 minutes is measured using a Karl Fischer coulometric titration method, the moisture content generated from the preliminarily-dried negative-electrode material is equal to or less than 0.20 wt% with respect to 100 wt% of the preliminarily-dried negative-electrode material.
[B6] The negative-electrode material for a lithium ion battery according to any one of [B1] to [B5],
wherein a specific surface area measured using a three-point BET method in nitrogen adsorption is equal to or greater than 1 m$^2$/g and equal to or less than 15 m$^2$/g.
[B7] The negative-electrode material for a lithium ion battery according to any one of [B1] to [B6],
wherein an amount of carbon dioxide gas adsorbed is less than 10.0 ml/g.
[B8] The negative-electrode material for a lithium ion battery according to any one of [B1] to [B7],
wherein a halogen content is less than 50 ppm.
[B9] A negative-electrode active material including the negative-electrode material according to any one of [B1] to [B8].
[B10] The negative-electrode active material according to [B9], further including a type of negative-electrode material different from the negative-electrode material.
[B11] The negative-electrode active material according to [B10],
wherein the different type of negative-electrode material is a graphite material.
[B12] A negative electrode for a lithium ion battery including the negative-electrode active material according to any one of [B9] to [B11].
[B13] A lithium ion battery including the negative electrode for a lithium ion battery according to [B12], an electrolyte, and a positive electrode.

[C1] A negative-electrode material for an alkali metal ion battery in which an average layer spacing $d_{002}$ of face (002) calculated by an X-ray diffraction method using CuK$\alpha$ radiation as a radiation source is equal to or greater than 0.340 nm,
wherein a ratio ($\rho^H/\rho^B$) of a density ($\rho^H$) measured using helium gas as a replacement medium to a density ($\rho^B$) measured using butanol as a replacement medium is greater than 1.05 and less than 1.25, and
a density ($\rho^H$) measured using helium gas as a replacement medium is equal to or greater than 1.84 g/cm$^3$ and equal to or less than 2.10 g/cm$^3$.

[C2] The negative-electrode material according to [C1],
wherein a density ($\rho^B$) measured using butanol as a replacement medium is equal to or greater than 1.50 g/cm$^3$ and equal to or less than 1.80 g/cm$^3$.

[C3] The negative-electrode material according to [C1] or [C2],
wherein when a moisture content generated by maintaining the negative-electrode material under conditions of a temperature of 40°C and a relative humidity of 90 %RH for 120 hours, maintaining the negative-electrode material under conditions of a temperature of 130°C and a nitrogen atmosphere for 1 hour to preliminarily dry the negative-electrode material, and maintaining the preliminarily-dried negative-electrode material at 200°C for 30 minutes is measured using a Karl Fischer coulometric titration method, the moisture content generated from the preliminarily-dried negative-electrode material is equal to or less than 0.20 wt% with respect to 100 wt% of the preliminarily-dried negative-electrode material.

[C4] The negative-electrode material according to any one of [C1] to [C3],
wherein when a half-cell, which is manufactured using the negative-electrode material as a negative electrode, using metallic lithium as a counter electrode, and using a solution in which LiPF$_6$ is dissolved in a carbonate-based solvent at a ratio of 1 M as an electrolyte solution, is charged at 25°C using a constant-current constant-voltage method under conditions of a charging current of 25 mA/g, a charging voltage 0 mV, and a charging cutoff current 2.5 mA/g and is discharged using a constant-current method under conditions of a discharging current 25 mA/g and a discharging cutoff voltage of 2.5 V, a discharging capacity is equal to or greater than 360 mAh/g.

[C5] The negative-electrode material according to any one of [C1] to [C4],
wherein when the negative-electrode material is embedded in an epoxy resin, the epoxy resin is cured, the resultant cured material is cut and polished to expose a cross-section of the negative-electrode material, and the cross-section is observed in a bright field with 1000 times magnification using an optical microscope, the cross-section of the negative-electrode material includes a first region and a second region having different reflectance ratios.

[C6] The negative-electrode material according to any one of [C1] to [C5],
wherein an amount of carbon dioxide gas adsorbed is less than 10.0 ml/g.

[C7] The negative-electrode material according to any one of [C1] to [C6],
wherein a pore volume in which a pore diameter measured using a mercury intrusion method ranges from 0.003 $\mu$m to 5 $\mu$m is less than 0.55 ml/g.

[C8] A negative-electrode active material including the negative-electrode material according to any one of [C1] to [C7].

[C9] The negative-electrode active material according to [C8], further including a type of negative-electrode material different from the negative-electrode material.

[C10] The negative-electrode active material according to [C9],
wherein the different type of negative-electrode material is a graphite material.

[C11] A negative electrode for an alkali metal ion battery, including:

a negative-electrode active material layer including the negative-electrode active material according to any one of [C8] to [C10]; and
a negative-electrode collector,
wherein the negative-electrode active material layer and the negative-electrode collector are stacked in this order.

[C12] An alkali metal ion battery including at least the negative electrode for an alkali metal ion battery according to [C11], an electrolyte, and a positive electrode.

[C13] The alkali metal ion battery according to [C12],
wherein the alkali metal ion battery is a lithium ion battery or a sodium ion battery.

[Examples]

The present invention will be described below in conjunction with examples and comparative examples, but the present invention is not limited to the examples. In the examples, "parts" represents "parts by weight".

[1] Evaluation Method of Negative-electrode Material

First, an evaluation method of negative-electrode materials obtained in examples and comparative examples to be described later will be described.

1. Grain Size Distribution

The grain size distribution of a negative-electrode material is measured using a laser diffraction grain size distribution measuring instrument LA-920 made by Horiba Ltd. and a laser diffraction method. The particle diameter ($D_{50}$, average particle diameter) of the negative-electrode material at the time of 50% accumulation in a volume-based cumulative distribution is calculated from the measurement result.

2. Specific Surface Area

A specific surface area is measured using NOVA-1200 made by Yuasa-Ionics Co. Ltd. and using a three-point BET method in nitrogen adsorption. The specific calculation method thereof is the same as described above.

3. $d_{002}$ and $L_{C(002)}$ of Negative-electrode Material

An average layer spacing $d_{002}$ of face (002) is measured using an X-ray diffraction apparatus "XRD-7000" made by Shimadzu Corporation.
The average layer spacing $d_{002}$ of face (002) is calculated from a spectrum obtained through the X-ray diffraction measurement of the negative-electrode material using the following Bragg equation.

$$\lambda = 2d_{hkl}\sin\theta \quad \text{Bragg equation} \quad (d_{hkl} = d_{002})$$

$\lambda$: wavelength of characteristic X-ray $K_{\alpha 1}$ output from negative electrode
$\theta$: reflection angle of spectrum
$L_{C(002)}$ is measured as follows.

The value of $L_{C(002)}$ is determined from the half-value width of the peak of 002 face and the diffraction angle in the spectrum obtained by X-ray diffraction measurement using the following Scherrer equation.

$$L_{C(002)} = 0.94\lambda/(\beta\cos\theta) \quad \text{(Scherrer equation)}$$

$L_{C(002)}$: size of crystallite
$\lambda$: wavelength of characteristic X-ray $K_{\alpha 1}$ output from negative electrode
$\beta$: half-value width of peak (radian)
$\theta$: reflection angle of spectrum

4. Amount of Carbon Dioxide Gas Adsorbed

The amount of carbon dioxide gas adsorbed is measured using a negative-electrode material subjected to vacuum drying at 130°C for 3 hours or more using a vacuum dryer as a measurement sample and using ASAP-2000M made by Micromeritics Instrument Corporation.
0.5 g of the measurement sample is input to a measurement sample tube, the measurement sample is subjected to vacuum drying at 300°C for 3 hours or more under a reduced pressure equal to or lower than 0.2 Pa, and the amount of carbon dioxide gas adsorbed is then measured.
The adsorption temperature is set to 0°C, the pressure is reduced until the pressure of the sample tube to which the measurement sample is input is equal to or lower than 0.6 Pa, carbon dioxide gas is introduced into the sample tube, and the amount of carbon dioxide gas adsorbed until the equilibrium pressure in the sample tube reaches 0.11 MPa (corresponding to a relative pressure of 0.032) is measured using a constant volume method and is expressed in the unit of ml/g. The adsorbed amount is a conversion value in the standard state (STP) .

5. Chlorine Content

HCl in combustion gas produced by combusting a negative-electrode material using an oxyhydrogen flame combustion apparatus was absorbed in 0.01 mole NaOH aqueous solution. Then, the chlorine content in the aqueous solution was quantified using an ion chromatography analyzer. The calibration curve of the ion chromatographic analyzer was prepared by analyzing a solution which was prepared by diluting a chloride ion standard solution for ion chromatography (sodium chloride aqueous solution with a chlorine ion concentration of 1000 ppm, made by Kanto Chemical Co., Inc.).

6. Chemisorbed Water Ratios A and B

The chemisorbed water ratios A and B were measured in the following process.

(Process 1) 1 g of the negative-electrode material was maintained in an apparatus of mini environment test equipment (SH-241 made by ESPEC Corp.) under the conditions of a temperature of 40°C and a relative humidity of 90 %RH for 120 hours. The negative-electrode material was spread in a vessel with a length of 5 cm, a width of 8 cm, and a height of 1.5 cm so as to be as small in thickness as possible and was placed in the apparatus.

(Process S2) (A) A step of maintaining 10 mg of the negative-electrode material under the conditions of a temperature of 130°C and a nitrogen atmosphere for 1 hour and (B) a step of raising the temperature of the negative-electrode material subjected to the step of (A) at 10°C/min from 40°C to 540°C under the nitrogen atmosphere and measuring a decrease in weight of the negative-electrode material were sequentially performed using a thermogravimetric apparatus (TG/DTA6300 made by Seiko Instruments Inc.) and the chemisorbed water ratio A and the chemisorbed water ratio B were calculated from the following expressions.

$$\text{Chemisorbed water ratio A } [\%] = 100 \times (Y_1 - Y_2)/X$$

$$\text{Chemisorbed water ratio B } [\%] = 100 \times (Y_2 - Y_3)/X$$

Here, X represents the weight of the negative-electrode material subjected to the step of (A). $Y_1$ represents the weight of the negative-electrode material at 150°C in the step of (B). $Y_2$ represents the weight of the negative-electrode material at 250°C in the step of (B). $Y_3$ represents the weight of the negative-electrode material at 500°C in the step of (B).

7. Measurement of Moisture Content using Karl Fischer's Coulometric Titration Method

The moisture content using the Karl Fischer's coulometric titration method is measured in the following process.

(Process 1) 1 g of the negative-electrode material was maintained in an apparatus of mini environment test equipment (SH-241 made by ESPEC Corp.) under the conditions of a temperature of 40°C and a relative humidity of 90 %RH for 120 hours. The negative-electrode material was spread in a vessel with a length of 5 cm, a width of 8 cm, and a height of 1.5 cm so as to be as small in thickness as possible and was placed in the apparatus.

(Process 2) The negative-electrode material was preliminarily dried by maintaining the negative-electrode material under the conditions of a temperature of 130°C and a nitrogen atmosphere for 1 hour, and then a moisture content generated by maintaining the preliminarily-dried negative-electrode material at 200°C for 30 minutes was measured using Karl Fischer's coulometric titration method and using CA-06 made by Mitsubishi Chemical Analytech Co., Ltd.

8. Measurement of Total Adsorbed Amount

1 g of the negative-electrode material was subjected to vacuum drying at 200°C for 24 hours and then the weight of the negative-electrode material was measured. Subsequently, the resultant was maintained in the mini environment test equipment (SH-241 made by ESPEC Corp.) under the conditions of at 40°C and a relative humidity of 90 %RH for 120 hours. The negative-electrode material was spread in a vessel with a length of 5 cm, a width of 8 cm, and a height of 1.5 cm so as to be as small in thickness as possible and was placed in the apparatus. Thereafter, the weight of the negative-electrode material was measured and the total adsorbed amount was measured using the following expression.

$$\text{Total adsorbed amount } [\%] = 100 \times (\text{weight after maintenance of 120 hours} - \text{weight after vacuum drying})/(\text{weight after vacuum drying})$$

9. Battery Characteristic

The initial efficiencies of the negative-electrode material just after being produced and the negative-electrode material after being subjected to the following storage test were measured using the following method. Then, the variations in the initial efficiencies were calculated.

A graph in which the vertical axis represents the voltage $V_q$ [V] at the time of discharging and the horizontal axis represents discharging capacity [mAh/g] per 1 g of the negative-electrode material was prepared for the negative-electrode material just after being produced. From this graph, discharging capacity A when $V_q$ reaches $V_0 \times 2.5$ and discharging capacity B when $V_q$ reaches 2.5 were calculated.

(Storage Test)

1 g of the negative-electrode material was maintained in an apparatus of mini environment test equipment (SH-241 made by ESPEC Corp.) under the conditions of a temperature of 40°C and a relative humidity of 90 %RH for 7 days. The negative-electrode material was spread in a vessel with a length of 5 cm, a width of 8 cm, and a height of 1.5 cm so as to be as small in thickness as possible and was placed in the apparatus. Thereafter, the negative-electrode material was dried by maintaining the negative-electrode material under the conditions of a temperature of 130° and the nitrogen atmosphere for 1 hour.

(1) Production of Half-Cell

1.5 parts of carboxymethyl cellulose (CMC Daicel 2200 made by DAICEL FINECHEM LTD.), 3.0 parts of styrene-butadiene rubber (TRD-2001 made by JSR Corporation), 2.0 parts of acetylene black (DENKA BLACK made by DENKI KAGAKU KOGYO KABUSHIKI KAISHA), and 100 parts of distilled water were added to 100 parts of the negative-electrode materials obtained in the examples and the comparative examples to be described later, and the resultant was stirred and mixed by the use of a rotation-revolution mixer to produce negative-electrode slurry.

The produced negative-electrode slurry was applied to one surface of a copper foil (NC-WS made by Furukawa Electric Co., Ltd.) with a thickness of 14 μm, the resultant was preliminarily dried in air of 60°C for 2 hours, and then the resultant was subjected to vacuum drying at 120°C for 15 hours. After the vacuum drying, an electrode was press-molded by the use of a roll press. The resultant was cut out in a disk shape with a diameter of 13 mm to produce a negative electrode. The thickness of the negative-electrode active material layer was 50 μm.

Metal lithium was formed in a disk shape with a diameter of 12 mm and a thickness of 1 mm to produce a counter electrode. A porous film of polyolefin (product name: CELGARD 2400, made by CELGARD Corporation) was used as the separator.

A bipolar half-cell having a 2032 coil cell shape was produced in a glove box in an argon atmosphere using the negative electrode, the counter electrode, and the separator and using a solution in which $LiPF_6$ was added at a ratio of 1 M to a mixed solvent of ethylene carbonate and diethyl carbonate at a volume ratio of 1:1 as the electrolyte solution, and the half-cell was evaluated as follows.

(2) Charging and Discharging of Half-Cell

Charging and discharging operations are performed under the following conditions.

Measurement temperature: 25°
Charging method: constant-current constant-voltage method, Charging current: 25 mA/g, Charging voltage: 0 mV, Charging cutoff current: 2.5 mA/g
Discharging method: constant-current method, Discharging current: 25 mA/g, Discharging cutoff voltage: 2.5 V

The charging capacity and the discharging capacity [mAh/g] per 1 g of the negative electrode material were calculated on the basis of the values of the charging capacity and the discharging capacity measured under the above-mentioned conditions. The initial efficiency and the initial efficiency variation were calculated using the following expressions.

```
Initial efficiency [%]=100×(discharging capacity)/(charging

capacity)
```

$$\text{Initial efficiency variation [\%]=100×(initial efficiency after}$$

$$\text{storage test)/(initial efficiency just after production)}$$

10. Pore Volume

The pore volume using a mercury intrusion method is measured using Autopore III 9420 made by Micromeritics Instrument Corporation.

The negative-electrode material is input to a sample vessel and is degassed with a pressure of 2.67 Pa or less for 30 minutes. Then, mercury is introduced into the sample vessel and the sample vessel is slowly pressurized to intrude mercury into the pores of the negative-electrode material (with a maximum pressure of 414 MPa). The pore volume distribution of the negative-electrode material is measured using the following expression from the relationship between the pressure and the amount of mercury intruded. The volume of mercury intruded into the negative-electrode material from a pressure (0.25 MPa) corresponding to a pore diameter of 5 $\mu$m to the maximum pressure (414 MPa: corresponding to a pore diameter of 3 nm) is set as a pore volume with a pore diameter of 5 $\mu$m or less. In calculation of the pore diameter, when mercury is intruded into a cylindrical pore with a diameter of D under a pressure of P and it is assumed that the surface tension of mercury is defined as Y and the contact angle between mercury and the pore wall is defined as $\theta$, the following expression is established from the balance of the surface tension and the pressure acting on the pore cross-section.

$$-\pi D\gamma\cos\theta=\pi(D/2)^2\cdot P$$

$$D=(-4\gamma\cos\theta)/P$$

Here, the relationship between the pressure P and the pore diameter D is calculated using the following expression by setting the surface tension of mercury to 484 dyne/cm, setting the contact angle between mercury and carbon to 130 degrees, expressing the pressure P in the unit of MPa, and expressing the pore diameter D in the unit of $\mu$m.

$$D=1.27/P$$

11. Measurement of Density

$\rho^B$ was measured using a butanol method on the basis of the method defined in JIS R7212.

$\rho^H$ was measured using a dry density meter AccuPyc 1330 made by Micromeritics Japan after the sample is dried at 120°C for 2 hours. The measurement was performed at 23°C. All the pressures are gauge pressures and are pressures obtained by subtracting the ambient pressure from the absolute pressure.

The measurement equipment includes a sample chamber and an expansion chamber, and the sample chamber includes a pressure meter measuring the pressure of the sample chamber. The sample chamber and the expansion chamber are connected to each other via a connecting pipe having a valve. A helium gas introduction pipe having a stop valve is connected to the sample chamber, and a helium gas discharge tube having a stop valve is connected to the expansion chamber.

The measurement was performed as follows. The volume ($V_{CELL}$) of the sample chamber and the volume ($V_{EXP}$) of the expansion chamber are measured in advance using a bogey tube.

A sample is input to the sample chamber, the inside of the drift apparatus is replaced with helium gas through the helium gas introduction pipe of the sample chamber, the connecting pipe, and the helium gas discharge pipe of the expansion chamber for 2 hours. Then, the valve between the sample chamber and the expansion chamber and the value of the helium gas discharge pipe from the expansion chamber are closed and helium gas is introduced from the helium gas introduction pipe of the sample chamber until 134 kPa. Thereafter, the stop valve of the helium gas introduction pipe is closed. The pressure ($P_1$) of the sample chamber is measured in 5 minutes after the stop valve is closed. Then, the valve between the sample chamber and the expansion chamber is opened to transfer the helium gas to the expansion chamber and the pressure ($P_2$) at that time is measured.

The volume ($V_{SAMP}$) of the sample was calculated using the following expression.

$$V_{SAMP}=V_{CELL}-V_{EXP}/[(P_1/P_2)-1]$$

Therefore, when the weight of the sample is defined as $W_{SAMP}$, the density is $\rho^H=W_{SAMP}/V_{SAMP}$.

12. Observation of Cross-section of Negative-electrode Material using Optical Microscope

About 10 wt% of the negative-electrode material was added to a liquid-phase epoxy resin, the resultant is mixed well, and the resultant was filled in a mold to embed the negative-electrode material in the epoxy resin. Subsequently, the epoxy resin was cured by maintaining the epoxy resin at 120°C for 24 hours. Thereafter, the cured epoxy resin was cut at an appropriate position so as to expose the negative-electrode material from the surface, and the cut face was polished in a mirror surface. Then, a cross-section of the negative-electrode material was observed and photographed in a bright field at 1000 times magnification using an optical microscope (Axioskop2 MAT made by Carl Zeiss AG).

[2] Production of Negative-electrode Material

(Example 1)

Oxidized pitch was produced from petroleum pitch on the basis of the method described in paragraph 0051 of Japanese Unexamined Patent Publication No. 8-279358. Subsequently, the oxidized pitch was used as a source material to perform a procedure of processes (a) to (f), whereby Negative-electrode material 1 was obtained.

(a) 510 g of oxidized pitch was spread in a heat-treating furnace with an internal volume of 60 L (with a length of 50 cm, a width of 40 cm, and a height of 30 cm) so as to be as small in thickness as possible and is placed therein. Thereafter, the temperature was raised at 100°C/hour from the room temperature to 500°C without performing any one of replacement of reducing gas, replacement of inert gas, flowing of reducing gas, and flowing of inert gas.
(b) Subsequently, the resultant was subjected to a defatting process at 500°C for 2 hours without performing any one of replacement of reducing gas, replacement of inert gas, flowing of reducing gas, and flowing of inert gas and was then cooled.
(c) The obtained powder is pulverized by the use of a vibrating ball mill.
(d) Thereafter, 204 g of the obtained powder was spread in a heat-treating furnace with an internal volume of 24 L (with a length of 40 cm, a width of 30 cm, and a height of 20 cm) so as to be as small in thickness as possible and is placed therein. Subsequently, the temperature was raised at 100°C/hour from the room temperature to 1200°C under replacement and flowing of inert gas (nitrogen).
(e) Under flowing of inert gas (nitrogen), the resultant was maintained at 1200°C for 8 hours to carbonize the resultant.
(f) Under flowing of inert gas (nitrogen), the resultant was naturally cooled to 600°C and was then cooled at 100°C/hour from 600°C to 100°C.

The occupation ratio of the source material in a space in which the carbonization process is performed was 8.5 kg/m$^3$.

(Example 2)

Phenol resin PR-55321B (made by Sumitomo Bakelite Co., Ltd.) which is a thermosetting resin was used as a source material to perform a procedure of processes (a) to (f), whereby Negative-electrode material 2 was obtained.

(a) 510 g of thermosetting resin was spread in a heat-treating furnace with an internal volume of 60 L (with a length of 50 cm, a width of 40 cm, and a height of 30 cm) so as to be as small in thickness as possible and is placed therein. Thereafter, the temperature was raised at 100°C/hour from the room temperature to 500°C without performing any one of replacement of reducing gas, replacement of inert gas, flowing of reducing gas, and flowing of inert gas.
(b) Subsequently, the resultant was subjected to a defatting process at 500°C for 2 hours without performing any one of replacement of reducing gas, replacement of inert gas, flowing of reducing gas, and flowing of inert gas and was then cooled.
(c) The obtained powder is pulverized by the use of a vibrating ball mill.
(d) Thereafter, 204 g of the obtained powder was spread in a heat-treating furnace with an internal volume of 24 L (with a length of 40 cm, a width of 30 cm, and a height of 20 cm) so as to be as small in thickness as possible and is placed therein. Subsequently, the temperature was raised at 100°C/hour from the room temperature to 1200°C under replacement and flowing of inert gas (nitrogen).
(e) Under flowing of inert gas (nitrogen), the resultant was maintained at 1200°C for 8 hours to carbonize the resultant.
(f) Under flowing of inert gas (nitrogen), the resultant was naturally cooled to 600°C and was then cooled at 100°C/hour from 600°C to 100°C.

The occupation ratio of the source material in a space in which the carbonization process is performed was 8.5 kg/m$^3$.

(Example 3)

Negative-electrode material 3 was produced using the same method as in Example 2, except that the occupation ratio of the source material in a space in which the carbonization process is performed was changed to 3.5 kg/m$^3$.

(Example 4)

Negative-electrode material 4 was produced using the same method as in Example 2, except that the occupation ratio of the source material in a space in which the carbonization process is performed was changed to 0.9 kg/m$^3$.

(Example 5)

Negative-electrode material 5 was produced using the same method as in Example 2, except that the occupation ratio of the source material in a space in which the carbonization process is performed was changed to 0.5 kg/m$^3$.

(Example 6)

Negative-electrode material 6 was produced using the same method as in Example 2, except that the occupation ratio of the source material in a space in which the carbonization process is performed was changed to 0.3 kg/m$^3$.

(Example 7)

Negative-electrode material 7 was produced using the same method as in Example 2, except that the occupation ratio of the source material in a space in which the carbonization process is performed was changed to 9.0 kg/m$^3$.

(Example 8)

Negative-electrode material 8 was produced using the same method as in Example 2, except that the occupation ratio of the source material in a space in which the carbonization process is performed was changed to 0.16 kg/m$^3$.

(Comparative Example 1)

Negative-electrode material 9 was produced using the same method as in Example 1, except that the occupation ratio of the source material in a space in which the carbonization process is performed was changed to 16.0 kg/m$^3$.

(Comparative Example 2)

Negative-electrode material 10 was produced using the same method as in Example 2, except that the occupation ratio of the source material in a space in which the carbonization process is performed was changed to 16.0 kg/m$^3$.

(Comparative Example 3)

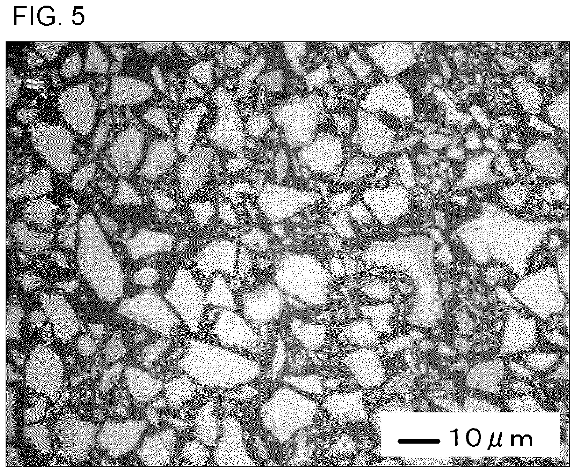

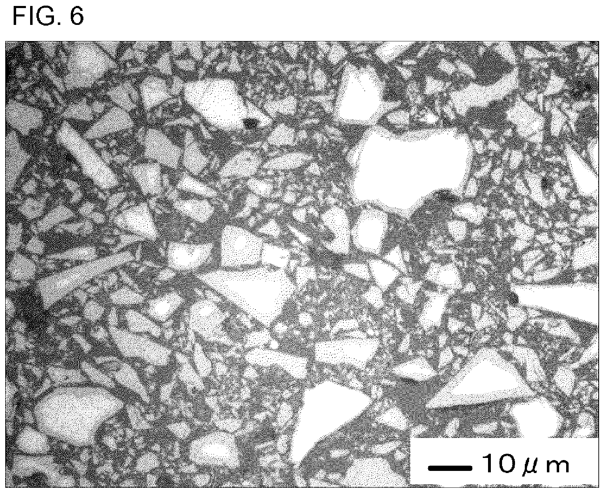

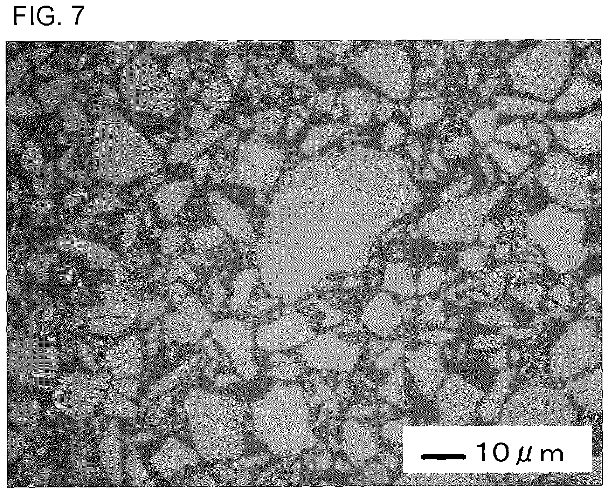

Negative-electrode material 11 was produced using the same method as in Example 2, except that the occupation ratio of the source material in a space in which the carbonization process is performed was changed to 15.72 kg/m$^3$.
Negative-electrode materials 1 to 11 obtained in the examples and the comparative examples were subjected to the above-mentioned various evaluations. The evaluation results are shown in Table 1. Optical-microscope photographs of cross-sections of the negative-electrode materials obtained in Example 1, Example 5, and Comparative Example 1 are shown in Figs. 5, 6, and 7, respectively.
In the negative-electrode materials obtained in Examples 1 to 8, the first region and the second region having different reflectance ratios were observed and the reflectance ration discontinuously varied at the interface between the first region and the second region. In the negative-electrode materials obtained in Examples 1 to 8, the first region was present along the outer edge of a cross-section of each negative-electrode material and the second region having a reflectance ratio larger than that of the first region was present inside the first region.

A lithium ion battery using the negative-electrode material having such a structure was excellent in storage characteristics and charging and discharging capacity.

On the other hand, the first region and the second region having different reflectance ratios were not observed in the negative-electrode materials obtained in Comparative Examples 1 to 3. A lithium ion battery using the negative-electrode material having such a structure was poorer in storage characteristics and charging and discharging capacity than the negative-electrode materials obtained in Examples 1 to 8.

[Table 1]

| Production method | Ex. 1 | Ex. 2 | Ex. 3 | Ex. 4 | Ex. 5 | Ex. 6 | Ex. 7 | Ex. 8 | Com. Ex. 1 | Com. Ex. 2 | Com. Ex. 3 |
|---|---|---|---|---|---|---|---|---|---|---|---|
| Source material | Petroleum pitch | Thermosetting resin | Thermosetting resin | Thermosetting resin | Thermosetting resin | Thermosetting resin | Thermosetting resin | Thermosetting resin | Petroleum pitch | Thermosetting resin | Thermosetting resin |
| Space occupying ratio [kg/m$^3$] | 8.5 | 8.5 | 3.5 | 0.9 | 0.5 | 0.3 | 9.0 | 0.16 | 16.0 | 16.0 | 15.7 |
| Physical property of negative-electrode material | | | | | | | | | | | |
| Chemisorbed water ratio A[%] | 0.44 | 0.35 | 0.23 | 0.17 | 0.08 | 0.22 | 0.20 | 0.10 | 0.70 | 0.60 | 0.65 |
| $100 \times (X-Y_2)/X$ [%] | 0.55 | 0.46 | 0.35 | 0.30 | 0.20 | 0.40 | 0.42 | 0.30 | 0.81 | 0.71 | 0.75 |
| Chemisorbed water ratio B [%] | 0.95 | 0.66 | 0.56 | 0.45 | 0.30 | 0.45 | 0.44 | 0.40 | 1.70 | 1.20 | 1.50 |
| $100 \times (X-Y_3)/X$ [%] | 1.50 | 1.12 | 0.91 | 0.75 | 0.50 | 1.00 | 0.80 | 0.75 | 2.51 | 1.91 | 2.01 |
| Moisture content by Karl Fischer method (200°C) [wt%] | 0.19 | 0.14 | 0.08 | 0.05 | 0.04 | 0.04 | 0.10 | 0.09 | 0.25 | 0.23 | 0.24 |
| Total amount of moisture adsorbed [%] | 2.0 | 2.4 | 2.4 | 2.0 | 2.2 | 2.2 | 2.2 | 2.2 | 2.4 | 2.5 | 2.5 |
| Specific surface area [m$^2$/g] | 5.3 | 5.2 | 5.5 | 5.7 | 5.9 | 5.8 | 5.8 | 5.2 | 0.9 | 17 | 5.5 |
| Amount of $CO_2$ adsorbed [mL/g] | 9.5 | 9.4 | 7.5 | 7.4 | 5.5 | 5.6 | 8.0 | 5.4 | 11.0 | 12.0 | 11.5 |
| Helium density/ butanol density | 1.13 | 1.12 | 1.10 | 1.09 | 1.13 | 1.07 | 1.23 | 1.13 | 1.30 | 1.29 | 1.31 |
| Helium density [g/cm$^3$] | 1.93 | 1.91 | 1.91 | 1.89 | 1.93 | 1.85 | 2.07 | 1.93 | 2.10 | 2.09 | 2.09 |

EP 2 892 094 B1

(continued)

| Production method | Ex. 1 | Ex. 2 | Ex. 3 | Ex. 4 | Ex. 5 | Ex. 6 | Ex. 7 | Ex. 8 | Com. Ex. 1 | Com. Ex. 2 | Com. Ex. 3 |
|---|---|---|---|---|---|---|---|---|---|---|---|
| Butanol density [g/cm$^3$] | 1.71 | 1.71 | 1.74 | 1.73 | 1.71 | 1.73 | 1.68 | 1.71 | 1.62 | 1.62 | 1.60 |
| Pore volume with pore diameter of 0.003 $\mu$m to 5 $\mu$m [mL/g] | 0.52 | 0.49 | 0.48 | 0.48 | 0.47 | 0.48 | 0.50 | 0.45 | 0.58 | 0.60 | 0.58 |
| Average particle diameter D$_{50}$ [$\mu$m] | 9.0 | 8.8 | 8.7 | 8.5 | 8.9 | 8.9 | 9.0 | 8.8 | 10.0 | 9.5 | 8.3 |
| Average layer spacing [nm] | 0.375 | 0.368 | 0.370 | 0.373 | 0.370 | 0.371 | 0.374 | 0.370 | 0.372 | 0.371 | 0.372 |
| Crystallite size [nm] | 4.5 | 3.5 | 2.5 | 2.4 | 1.5 | 1.6 | 3.5 | 1.2 | 6.0 | 5.5 | 5.5 |
| Amount of chlorine [ppm] | 0 | 0 | 0 | 0 | 0 | 0 | 0 | 0 | 0 | 0 | 0 |
| observation of cross-section of negative-electrode material using optical microscope | | | | | | | | | | | |
| First region and second region having different reflectance ratios | Present | Present | Present | Present | Present | Present | Present | Present | Absent | Absent | Absent |
| Reflectance of interface between first region and second region | Disconti nuous variatio n | Disconti nuous variatio n | Disconti nuous variatio n | Disconti nuous variatio n | Disconti nuous variatio n | Disconti nuous variatio n | Disconti nuous variatio n | Disconti nuous variatio n | - | - | - |
| Battery characteristics | | | | | | | | | | | |

(continued)

| Production method | Ex. 1 | Ex. 2 | Ex. 3 | Ex. 4 | Ex. 5 | Ex. 6 | Ex. 7 | Ex. 8 | Com. Ex. 1 | Com. Ex. 2 | Com. Ex. 3 |
|---|---|---|---|---|---|---|---|---|---|---|---|
| Just after production | | | | | | | | | | | |
| Discharging capacity A [mAh/g] | 138 | 160 | 187 | 193 | 196 | 196 | 194 | 195 | 130 | 129 | 125 |
| Discharging capacity B [mAh/g] | 362 | 364 | 406 | 428 | 446 | 445 | 431 | 444 | 361 | 359 | 343 |
| A/B | 0.38 | 0.44 | 0.46 | 0.45 | 0.44 | 0.44 | 0.45 | 0.44 | 0.36 | 0.36 | 0.36 |
| Charging capacity [mAh/g] | 411 | 414 | 461 | 486 | 507 | 500 | 490 | 505 | 410 | 408 | 405 |
| Discharging capacity [mAh/g] | 362 | 364 | 406 | 428 | 446 | 445 | 431 | 444 | 361 | 359 | 343 |
| Initial efficiency [%] | 88 | 88 | 88 | 88 | 88 | 89 | 88 | 88 | 88 | 88 | 85 |
| After storage test | | | | | | | | | | | |
| Charging capacity [mAh/g] | 436 | 426 | 472 | 491 | 506 | 501 | 485 | 504 | 462 | 449 | 450 |
| Discharging capacity [mAh/g] | 362 | 362 | 406 | 427 | 445 | 446 | 422 | 442 | 360 | 359 | 340 |
| Initial efficiency [%] | 83 | 85 | 86 | 87 | 88 | 89 | 87 | 88 | 78 | 80 | 76 |
| Variation of initial efficiency [%] | 94 | 97 | 98 | 99 | 100 | 100 | 99 | 100 | 89 | 91 | 89 |

This application is based on Japanese Patent Application No. 2012-188326 filed on August 29, 2012, Japanese Patent Application No. 2012-268643 filed on December 7, 2012, Japanese Patent Application No. 2012-268645 filed on December 7, 2012, Japanese Patent Application No. 2013-021643 filed on February 6, 2013, and Japanese Patent Application No. 2013-127294 filed on June 18, 2013.

**Claims**

1. A carbonaceous negative-electrode material for an alkali metal ion battery in which an average layer spacing $d_{002}$ of face (002) which is calculated by an X-ray diffraction method using CuK$\alpha$ radiation as a radiation source is equal to or greater than 0.340 nm,
   wherein the negative-electrode material is maintained under conditions of a temperature of 40°C and a relative humidity of 90 %RH for 120 hours,

   (A) a step of maintaining the negative-electrode material under conditions of a temperature of 130°C and a nitrogen atmosphere for 1 hour and (B) a step of raising the temperature of the negative-electrode material subjected to the step of (A) at 10°C/min from 40°C to 540°C under the nitrogen atmosphere and measuring a decrease in weight of the negative-electrode material are sequentially performed using a thermogravimetric apparatus, and

   when a weight of the negative-electrode material after the step of (A) is X, a weight of the negative-electrode material at 150°C in the step of (B) is $Y_1$, and a weight of the negative-electrode material at 250°C in the step of (B) is $Y_2$, a chemisorbed water ratio A defined as $100 \times (Y_1-Y_2)/X$ is equal to or less than 0.5%.

2. The negative-electrode material according to claim 1,
   wherein the chemisorbed water ratio A is equal to or less than 0.3%.

3. The negative-electrode material according to claim 1 or 2,
   wherein $100 \times (X-Y_2)/X$ is equal to or less than 0.6%.

4. The negative-electrode material according to any one of claims 1 to 3,
   wherein when a weight of the negative-electrode material at 500°C in the step of (B) is $Y_3$, a chemisorbed water ratio B defined as $100 \times (Y_2-Y_3)/X$ is equal to or less than 1.0%.

5. The negative-electrode material according to claim 4,
   wherein $100 \times (X-Y_3)/X$ is equal to or less than 1.6%.

6. The negative-electrode material according to any one of claims 1 to 5,
   wherein when a moisture content generated by maintaining the negative-electrode material under conditions of a temperature of 40°C and a relative humidity of 90 %RH for 120 hours, maintaining the negative-electrode material under conditions of a temperature of 130°C and a nitrogen atmosphere for 1 hour to preliminarily dry the negative-electrode material, and maintaining the preliminarily-dried negative-electrode material at 200°C for 30 minutes is measured using a Karl Fischer coulometric titration method, the moisture content generated from the preliminarily-dried negative-electrode material is equal to or less than 0.20 wt% with respect to 100 wt% of the preliminarily-dried negative-electrode material.

7. The negative-electrode material according to any one of claims 1 to 6,
   wherein a specific surface area measured using a three-point BET method in nitrogen adsorption is equal to or greater than 1 m$^2$/g and equal to or less than 15 m$^2$/g.

8. The negative-electrode material according to any one of claims 1 to 7,
   wherein an amount of carbon dioxide gas adsorbed is less than 10.0 ml/g.

9. The negative-electrode material according to any one of claims 1 to 8,
   wherein the negative-electrode material is a carbonized material of a resin composition.

10. A negative-electrode active material comprising the negative-electrode material according to any one of claims 1 to 9.

11. The negative-electrode active material according to claim 10, further comprising a type of negative-electrode material different from the negative-electrode material.

12. The negative-electrode active material according to claim 11,
   wherein the different type of negative-electrode material is a graphite material.

13. A negative electrode for an alkali metal ion battery comprising:

   a negative-electrode active material layer including the negative-electrode active material according to any one of claims 10 to 12; and
   a negative-electrode collector,
   wherein the negative-electrode active material layer and the negative-electrode collector are stacked in this order.

14. An alkali metal ion battery comprising at least:

   the negative electrode for an alkali metal ion battery according to claim 13;
   an electrolyte; and
   a positive electrode.

15. The alkali metal ion battery according to claim 14,
   wherein the alkali metal ion battery is a lithium ion battery or a sodium ion battery.


**Patentansprüche**

1. Kohlenstoffhaltiges Negativelektrodenmaterial für eine Alkalimetallionenbatterie, bei der eine durchschnittliche Beabstandung $d_{002}$ einer Stirnfläche (002), die durch ein Röntgenstrahldiffraktionsverfahren unter Benutzung von CuKα-Strahlung als Strahlungsquelle berechnet wird, gleich oder größer als 0,340 nm ist,
   wobei das Negativelektrodenmaterial unter Bedingungen einer Temperatur von 40 °C und einer relativen Feuchtigkeit von 90% RH für 120 Stunden gehalten wird,
   wobei A) ein Schritt des Haltens des Negativelektrodenmaterials unter Bedingungen einer Temperatur von 130 °C und einer Stickstoffatmosphäre für 1 Stunde und B) ein Schritt des Erhöhens der Temperatur des Negativelektrodenmaterials, das dem Schritt A) unterzogen wurde, bei 10 °C/min von 40 °C auf 540 °C unter der Stickstoffatmosphäre und Messens einer Gewichtsabnahme des Negativelektrodenmaterials sequentiell unter Benutzung einer Thermogravimetrievorrichtung ausgeführt wird, und
   wobei, wenn ein Gewicht des Negativelektrodenmaterials nach dem Schritt A) X beträgt, ein Gewicht des Negativelektrodenmaterials auf 150 °C im Schritt B) $Y_1$ beträgt, und ein Gewicht des Negativelektrodenmaterials auf 250 °C im Schritt B) $Y_2$ beträgt, ein Chemisorptionswasserverhältnis A, das als $100x(Y_1-Y_2)/X$ definiert ist, gleich oder weniger als 0,5% ist.

2. Negativelektrodenmaterial nach Anspruch 1, wobei das Chemisorptionswasserverhältnis A gleich oder weniger als 0,3% ist.

3. Negativelektrodenmaterial nach einem der Ansprüche 1 oder 2,
   wobei $100x(X-Y_2)/X$ gleich oder weniger als 0,6% ist.

4. Negativelektrodenmaterial nach einem der Ansprüche 1 bis 3,
   wobei, wenn ein Gewicht des Negativelektrodenmaterials auf 500 °C im Schritt B) $Y_3$ beträgt, ein Chemisorptionswasserverhältnis B, das als $100x(Y_2-Y_3)/X$ definiert ist, gleich oder weniger als 1,0% ist.

5. Negativelektrodenmaterial nach Anspruch 4, wobei $100x(X-Y_3)/X$ gleich oder weniger als 1,6% ist.

6. Negativelektrodenmaterial nach einem der Ansprüche 1 bis 5,
   wobei, wenn ein Feuchtigkeitsgehalt, der durch Halten des Negativelektrodenmaterials unter Bedingungen einer Temperatur von 40 °C und einer relativen Feuchtigkeit von 90% RH für 120 Stunden, Halten des Negativelektrodenmaterials unter Bedingungen einer Temperatur von 130 °C und einer Stickstoffatmosphäre für 1 Stunde zum vorläufigen Trocknen des Negativelektrodenmaterials und Halten des vorläufig getrockneten Negativelektrodenmaterials auf 200 °C für 30 Minuten erzeugt wird, unter Anwendung eines Karl-Fischer-Coulometrietitrationsverfahrens gemessen wird, der Feuchtigkeitsgehalt, der aus dem vorläufig getrockneten Negativelektrodenmaterials erzeugt wird, gleich oder weniger als 0,20 Gew.-% bezüglich 100 Gew.-% des vorläufig getrockneten Negativelektrodenmaterials ist.

**7.** Negativelektrodenmaterial nach einem der Ansprüche 1 bis 6, wobei ein spezifischer Oberflächenbereich, der unter Anwendung eines Dreipunkt-BET-Verfahrens gemessen wird, in Stickstoffadsorption gleich oder größer als 1 $m^2$/g und gleich oder weniger als 15 $m^2$/g ist.

**8.** Negativelektrodenmaterial nach einem der Ansprüche 1 bi 7, wobei die Menge an adsorbiertem Kohlendioxidgas weniger als 10,0 ml/g ist.

**9.** Negativelektrodenmaterial nach einem der Ansprüche 1 bis 8, wobei das Negativelektrodenmaterial ein karbonisiertes Material aus einer Harzzusammensetzung ist.

**10.** Negativelektrodenaktivmaterial, umfassend das Negativelektrodenmaterial nach einem der Ansprüche 1 bis 9.

**11.** Negativelektrodenaktivmaterial nach Anspruch 10, ferner umfassend eine Art von Negativelektrodenmaterial, das vom Negativelektrodenmaterial abweicht.

**12.** Negativelektrodenaktivmaterial nach Anspruch 11, wobei die andere Art von Negativelektrodenmaterial ein Graphitmaterial ist.

**13.** Negativelektrode für eine Alkalimetallionenbatterie, umfassend:

eine Negativelektrodenaktivmaterialschicht mit dem Negativelektrodenaktivmaterial nach einem der Ansprüche 10 bis 12; und
einen Negativelektrodenkollektor,
wobei die Negativelektrodenaktivmaterialschicht und der Negativelektrodenkollektor in dieser Reihenfolge gestapelt sind.

**14.** Alkalimetallionenbatterie, zumindest umfassend:

die Negativelektrode für eine Alkalimetallionenbatterie nach Anspruch 13;
ein Elektrolyt; und
eine Positivelektrode.

**15.** Alkalimetallionenbatterie nach Anspruch 14, wobei die Alkalimetallionenbatterie eine Lithiumionenbatterie oder eine Natriumionenbatterie ist.

**Revendications**

**1.** Un matériau d'électrode négative carboné pour une batterie ionique alcaline, dans lequel un espacement moyen des couches $d_{002}$ de la face (002) calculé par une méthode de diffraction de rayons X utilisant le rayonnement CuKa en tant que source de rayonnement est égal ou supérieur à 0,340 nm, dans lequel le matériau d'électrode négative est maintenu dans des conditions de température de 40 °C et d'humidité relative de 90% HR pendant 120 heures,

(A) une étape de maintien du matériau d'électrode négative dans des conditions de température de 130 °C et une atmosphère d'azote pendant 1 heure et (B) une étape d'élévation de la température du matériau d'électrode négative soumis à l'étape (A) à 10 °C / min de 40 °C à 540 °C sous l'atmosphère d'azote et de mesure d'une diminution du poids du matériau d'électrode négative sont effectuées séquentiellement en utilisant un appareil thermogravimétrique, et

lorsqu'un poids du matériau d'électrode négative après l'étape (A) est X, un poids du matériau d'électrode négative à 150 °C dans l'étape de (B) est $Y_1$, et un poids du matériau d'électrode négative à 250 °C dans l'étape de (B) est $Y_2$, un rapport d'eau chimisorbée A défini comme $100 \times (Y_1 - Y_2) / X$ est égal ou inférieur à 0,5%.

**2.** Le matériau d'électrode négative selon la revendication 1,
dans lequel le rapport d'eau chimisorbée A est égal ou inférieur à 0,3%.

**3.** Le matériau d'électrode négative selon la revendication 1 ou 2,
dans lequel 100 x $(X - Y_2)$ / X est égal ou inférieur à 0,6%.

**4.** Le matériau d'électrode négative selon l'une quelconque des revendications 1 à 3,
dans lequel lorsqu'un poids du matériau d'électrode négative à 500 °C dans l'étape (B) est $Y_3$, un rapport d'eau chimisorbée B défini comme $100 \times (Y_2 - Y_3)$ / X est égal ou inférieur à 1,0%.

**5.** Le matériau d'électrode négative selon la revendication 4,
dans lequel $100 \times (X - Y_3)$ / X est égal ou inférieur à 1,6%.

**6.** Le matériau d'électrode négative selon l'une quelconque des revendications 1 à 5,
dans lequel, lorsqu'une teneur en humidité générée par le maintien du matériau d'électrode négative dans des conditions de température de 40 C et d'humidité relative de 90% HR pendant 120 heures, le maintien du matériau d'électrode négative dans des conditions de température de 130 °C et une atmosphère d'azote pendant 1 heure pour sécher préalablement le matériau d'électrode négative, et le maintien du matériau d'électrode négative préalablement séché à 200 °C pendant 30 minutes est mesuré en utilisant une méthode de titrage coulométrique selon Karl Fischer, la teneur en humidité générée à partir du matériau d'électrode négative préalablement séché est égale ou inférieure à 0,20% en poids par rapport à 100% en poids de la matière d'électrode négative préalablement séchée.

**7.** Le matériau d'électrode négative selon l'une quelconque des revendications 1 à 6,
dans lequel une surface spécifique mesurée en utilisant une méthode BET à trois points dans l'adsorption d'azote est égale ou supérieure à 1 $m^2$/g et égale ou inférieure à 15 $m^2$/g.

**8.** Le matériau d'électrode négative selon l'une quelconque des revendications 1 à 7,
dans lequel une quantité de gaz carbonique adsorbé est inférieure à 10,0 ml/ g.

**9.** Le matériau d'électrode négative selon l'une quelconque des revendications 1 à 8,
dans lequel le matériau d'électrode négative est un matériau carbonisé d'une composition de résine.

**10.** Un matériau actif d'électrode négative comprenant le matériau d'électrode négative selon l'une quelconque des revendications 1 à 9.

**11.** Le matériau actif d'électrode négative selon la revendication 10, comprenant en outre un type de matériau d'électrode négative différent du matériau d'électrode négative.

**12.** Le matériau actif d'électrode négative selon la revendication 11,
dans lequel le type différent de matériau d'électrode négative est un matériau de graphite.

**13.** Une électrode négative pour une batterie à ions de métal alcalin comprenant:

une couche de matériau actif d'électrode négative comprenant le matériau actif d'électrode négative selon l'une quelconque des revendications 10 à 12; et
un collecteur d'électrode négative,
dans laquelle la couche de matériau actif d'électrode négative et le collecteur d'électrode négative sont empilés dans cet ordre.

**14.** Une batterie à ions de métal alcalin comprenant au moins:

l'électrode négative pour une batterie à ions de métal alcalin selon la revendication 13;
un électrolyte; et
une électrode positive.

**15.** La batterie à ions de métal alcalin selon la revendication 14,
dans laquelle la batterie à ions de métal alcalin est une batterie à ions de lithium ou une batterie à ions de sodium.

FIG. 1

10

FIG. 2

FIG. 3

FIG. 4

(a)　　　　　　　　(b)　　　　　　　　(c)

<u>100</u>

FIG. 5

FIG. 6

10 μm

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8064207 A
- JP 8115723 A
- JP 10223226 A
- WO 2007040007 A
- JP 8279358 A
- JP 2012188326 A
- JP 2012268643 A
- JP 2012268645 A
- JP 2013021643 A
- JP 2013127294 A